(19) Europäisches Patentamt
European Patent Office
Office européen des brevets

(11) EP 2 006 072 A1

(12) EUROPEAN PATENT APPLICATION
published in accordance with Art. 153(4) EPC

(43) Date of publication:
24.12.2008 Bulletin 2008/52

(21) Application number: 07738364.4

(22) Date of filing: 13.03.2007

(51) Int Cl.:
*B29C 49/00* (2006.01)

(86) International application number:
PCT/JP2007/054892

(87) International publication number:
WO 2007/122906 (01.11.2007 Gazette 2007/44)

(84) Designated Contracting States:
DE

(30) Priority: 29.03.2006 JP 2006092165

(71) Applicant: Mitsui Chemicals, Inc.
Tokyo 105-7117 (JP)

(72) Inventors:
- UOSAKI, Hirotaka
Sodegaura-shi, Chiba 299-0265 (JP)
- KAWABE, Kuniaki
Sodegaura-shi, Chiba 299-0265 (JP)
- YASUI, Motoyasu
Sodegaura-shi, Chiba 299-0265 (JP)
- NAKAMURA, Hideo
Koga City, Ibaraki 306-0213 (JP)
- AMADA, Yasushi
Tokyo 104-0031 (JP)

(74) Representative: HOFFMANN EITLE
Patent- und Rechtsanwälte
Arabellastraße 4
81925 München (DE)

# (54) PROCESS FOR PRODUCTION OF MOLDED ARTICLES BY BLOW MOLDING

(57) The present invention is to provide a process for producing a molded product by blow molding a mixture containing a polyolefin resin and a polyethylene wax which having a density of 890 to 980 (kg/m$^3$) as determined by the density gradient tube method in accordance with JIS K7112 and a number average molecular weight (Mn) of 500 to 3,000 in terms of polyethylene as determined by gel permeation chromatography (GPC) and satisfying the relationship represented by the following expression (I):

$$B \leq 0.0075 \times K \quad \ldots \quad (I)$$

(In the above formula (I), B is a content ratio (% by weight) of components having a molecular weight of 20, 000 or more in terms of polyethylene in the polyethylene wax as determined by gel permeation chromatography and K is a melt viscosity (mPa·s) of the polyethylene wax at 140°C.)

According to the present invention, in producing a molded product by blow molding using a polyolefin resin as a raw material, the productivity at the time of the blow molding is improved, and a molded product which is not impaired in the mechanical properties inherent in a polyolefin resin is provided.



Printed by Jouve, 75001 PARIS (FR)

## Description

[TECHNICAL FIELD]

The present invention relates to a process for producing a molded product by blow molding, and more particularly to a process for producing a molded product by blow molding by using a polyolefin resin and a specific polyethylene wax as raw materials.

[BACKGROUND ART]

The polyolefin resin has been conventionally used for various applications such as containers such as bottles, tanks and the like, building materials for external walls and the like, automobile parts such as automobile exterior parts, industrial machine parts, electric and electronic components, and others by blow molding. Recent years, it has been more strongly desired to improve the productivity in such blow molding. As a general process for improving the productivity in molding such as blow molding and the like, there is known a process of molding by adding a molding auxiliary agent. For example, there has been studied a process of molding by applying a molding auxiliary agent such as oil, a polyethylene wax and the like to a thermoplastic resin to be molded (For example, Patent Documents 1 and 2).
However, even though a thermoplastic resin such as a polyolefin resin and the like is blow-molded using a conventional molding auxiliary agent, the moldability itself tends to be improved, but the properties of the resulting molded product, for example, mechanical properties may be deteriorated in some cases. When molding a molded product and using it, there may have a problem in some cases depending on the application of the molded product.

[Patent Document 1] JP-B-H05(1993)-80492
[Patent Document 2] Japanese Patent Application Laid-Open No. 2003-528948

[DISCLOSURE OF THE INVENTION]

[PROBLEMS TO BE SOLVED BY THE INVENTION]

An object of the present invention is to provide a process for producing a molded product of a polyolefin resin in which the productivity at the time of blow molding is improved and the mechanical properties inherent in a polyolefin resin are not impaired.

[MEANS TO SOLVE THE PROBLEMS]

The present inventors have studied the above problems and have found that if blow molding is performed using a polyolefin resin and a specific polyethylene wax as raw materials, a molded product, in which the productivity is improved and the mechanical properties inherent in a polyolefin resin are not impaired, is obtained, and have thus completed the present invention.
That is, a process for producing a molded product of the present invention is characterized in that the molded product is produced by blow molding a mixture containing a polyolefin resin and a polyethylene wax having a density of 890 to 980 ($kg/m^3$) as measured by the density gradient tube method in accordance with JIS K7112 and a number average molecular weight (Mn) of 500 to 3,000 in terms of polyethylene as determined by gel permeation chromatography (GPC) and satisfying the relationship represented by the following expression (I):

$$B \leq 0.0075 \times K \ldots (I)$$

(In the expression (I), B is a content ratio (% by weight) of components having a molecular weight of 20,000 or more in terms of polyethylene in the polyethylene wax as determined by gel permeation chromatography and K is a melt viscosity (mPa·s) of the polyethylene wax at 140°C).
Further, the polyethylene wax preferably satisfies the relationship represented by the following expression (II):

$$A \leq 230 \times K^{(-0.537)} \ldots (II)$$

(In the expression (II), A is a content ratio (% by weight) of components having a molecular weight of 1,000 or less in terms of polyethylene in the polyethylene wax as determined by gel permeation chromatography and K is a melt viscosity (mPa·s) of the polyethylene wax at 140°C.)

[EFFECT OF THE INVENTION]

According to the process for producing a molded product of the present invention, there is provided an excellent productivity at the time of blow molding of a polyolefin resin. In addition, in a molded product of a polyolefin resin obtained by blow molding, the mechanical properties inherent in a polyolefin resin is not impaired.

[BEST MODE FOR CARRYING OUT THE INVENTION]

Hereinafter, the present invention is explained in detail.
Firstly, the raw materials used for the blow molding of the present invention are explained.

[Polyolefin resin]

The polyolefin resin in the present invention usually refers to a polyolefin resin used for blow molding. The polyolefin resin includes polyethylene, polypropylene, or a blended product thereof.

<Polyethylene>

The polyethylene used in the present invention specifically refers to a homopolymer of ethylene, a copolymer of ethylene and a small amount of an α-olefin, or a blended product thereof having an MI of 0.01 to 100 g/10 min as measured at 190°C under a test load of 21.18 N according to JIS K7210.
The polyethylene includes a high density polyethylene or a blended product thereof having a density of 940 to 980 ($kg/m^3$), a low density polyethylene, a medium density polyethylene, a linear low density polyethylene, an ultra low density polyethylene, or a blended product thereof having a density of 900 ($kg/m^3$) or more and less than 940 ($kg/m^3$).
In the present invention, the measurement conditions of the MI and density of polyethylene are as follows.

(MI)

The MI was measured at 190°C under a test load of 21.18 N according to JIS K7210.

(Density)

The density was measured by the density gradient tube method according to JIS K7112.
The form of the above polyethylene is not particularly limited, but is typically particles in the form of pellets or tablets.

<Polypropylene>

The polypropylene used in the present invention specifically refers to a homopolymer of propylene, a copolymer of propylene and an α-olefin (excluding propylene), or a blended product thereof having an MI of 0.01 to 100 g/10 min as measured at 230°C under a test load of 21.18 N according to JIS K7210. The polypropylene specifically includes a propylene homopolymer, a polypropylene block copolymer of propylene and an α-olefin (excluding propylene), a polypropylene random copolymer, or a blended product thereof.
In the present invention, the measurement condition of the MI of polyethylene is as follows.

(MI)

The MI was measured at 230°C under a test load of 21.18 N according to JIS K7210.
The form of the polyethylene is not particularly limited, but is typically particles in the form of pellets or tablets.

[Polyethylene Wax]

The polyethylene wax in the present invention refers to a homopolymer of ethylene, or a copolymer of ethylene and an α-olefin, or a blended product thereof having a number average molecular weight (Mn) of 500 to 3, 000 in terms

of polyethylene as determined by gel permeation chromatography (GPC). The number average molecular weight (Mn) in terms of polyethylene of the polyethylene wax was determined by gel permeation chromatography (GPC) under the following conditions.

(Number Average Molecular Weight (Mn))

The number average molecular weight was determined by the GPC measurement. The measurement was performed under the following conditions. In addition, the number average molecular weight was determined based on the following conversion method by preparing a calibration curve using a commercially available monodisperse standard polystyrene.
Apparatus: Gel permeation Chromatograph Alliance GPC 2000 System (manufactured by Waters Corporation)
Solvent: o-dichlorobenzene
Column: TSK gel column (manufactured by Tosoh Corporation) x 4
Flow rate: 1.0 mL/min
Sample: 0.15 mg/mL o-dichlorobenzene solution
Temperature: 140°C
Molecular weight conversion: in terms of PE/universal calibration method
In addition, for the calculation of the universal calibration, the following coefficients of Mark-Houwink viscosity equations were used.
The coefficient of polystyrene (PS): KPS=1.38 x $10^{-4}$, aPS=0.70
The coefficient of polyethylene (PE): KPE=5.06 x $10^{-4}$, aPE=0.70
When the polyethylene wax has the composition and molecular weight, the productivity at the time of molding tends to be improved.
The polyethylene wax used in the present invention has a density in the range of 890 to 980 (kg/$m^3$). The density of the polyethylene wax is a value as measured by the density gradient tube method according to JIS K7112. If the polyethylene wax has a density within the range, the productivity in molding tends to be improved.
The polyethylene wax of the present invention is characterized by having the specific relationship between the molecular weight and the melt viscosity represented by the following expression (I).

$$B \leq 0.0075 \times K \ldots \text{(I)}$$

In the expression (I), B is the content ratio (% by weight) of the components in the polyethylene wax having a molecular weight of 20,000 or more in terms of polyethylene as determined by gel permeation chromatography, and K is the melt viscosity (mPa·s) of the polyethylene wax as measured by a Brookfield (B-type) viscometer (B-type) at 140°C.
If a polyethylene wax satisfying the condition of the above expression (I) is used, in the resulting molded product, the mechanical properties inherent in a polyolefin resin are unlikely to be impaired.
Generally, if a mixture of a polyolefin resin and a polyethylene wax having a low melt viscosity is blow molded, the productivity in molding tends to be improved because the viscosity of the whole mixture is decreased. However, even if the productivity is improved in this manner, the mechanical properties of the resulting molded product were not sufficient in some cases.
The present inventors have studied the above problem and found that, in the mechanical properties of the resulting molded product such as a sheet, a film and the like obtained by blow molding, the ratio of the components having a molecular weight of 20,000 or higher of the polyethylene waxes used is extremely important in the relationship with the melt viscosity. Although the detailed mechanism is not clear, it is presumed that when the polyethylene wax and the polyethylene for the molded product are melt kneaded, the melt behavior of the component having a molecular weight of not less than 20,000 in the whole polyethylene wax is specific even in the whole wax, and unless the amount of the component having a molecular weight of not less than 20,000 is decreased to not more than a certain proportion from the viewpoint of melt viscosity of the whole polyethylene wax, the polyethylene wax cannot be favorably dispersed in the polyethylene, resulting in that the mechanical properties of the final molded product are influenced.
The polyethylene wax having a B value in the range may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.
Further, the B value may be controlled by a polymerization temperature. For example, when a polyethylene wax is produced using a metallocene catalyst described later, the polymerization temperature is typically in the range of 100 to 200°C, but from the viewpoint of producing a polyethylene wax having the B value, the polymerization temperature is preferably in the range of 100 to 180°C and more preferably in the range of 100 to 170°C.

The polyethylene wax of the present invention further preferably has a specific relationship between the molecular weight and the melt viscosity represented by the following expression.

$$A \leq 230 \times K^{(-0.537)} \ldots \text{(II)}$$

Here, in the formula (II), A is the content ratio (% by weight) in weight standard of the components in the polyethylene wax having a molecular weight of 1,000 or less in terms of polyethylene as determined by gel permeation chromatography, and K is the melt viscosity (mPa·s) of the polyethylene wax at 140°C.

If a polyethylene wax satisfying the condition of the expression (II) is used, in the resulting molded product, the mechanical properties inherent in a polyolefin resin are unlikely to be impaired, and the bleeding-out from the surface of the molded product tends to be decreased.

As mentioned above, generally, if a mixture of a polyolefin resin and a polyethylene wax having a low melt viscosity is blow molded, the productivity in molding tends to be improved because the viscosity of the whole mixture is decreased. However, even if the productivity is improved, in the resulting molded product, the mechanical properties inherent in a polyolefin resin were impaired in some cases, and the bleeding-out from the surface of the molded product became a problem in some cases.

The present inventors have studied the problem and found that, in the mechanical properties of the resulting molded product such as a sheet, film and the like obtained by blow molding, the ratio of the components having a molecular weight of 1, 000 or less of the polyethylene waxes used is extremely important in the relationship with the melt viscosity. Although the detailed mechanism is not clear, it is presumed that when the polyethylene wax and the polyethylene for the molded product are melt kneaded, the component having a molecular weight of not more than 1,000 in the whole polyethylene wax is liable to be melted and its melt behavior is specific even in the whole wax, and unless the amount of the component having a molecular weight of not more than 1,000 is decreased to not more than a certain proportion from the viewpoint of melt viscosity of the whole polyethylene wax, the component bleeds out on the surface and occasionally causes deterioration, resulting in that the mechanical properties of the final molded product and the bleedout of the final molded product are influenced.

The polyethylene wax having an A value in the above range may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.

Further, the A value may be controlled by a polymerization temperature. For example, when a polyethylene wax is produced using a metallocene catalyst described later, the polymerization temperature is typically in the range of 100 to 200°C, but from the viewpoint of producing a polyethylene wax having the A value, the polymerization temperature is preferably in the range of 100 to 180°C, and more preferably in the range of 100 to 170°C.

The polyethylene wax has a number average molecular weight (Mn) in the range of 500 to 3,000 and preferably in the range of 1,500 to 3,000.

If the polyethylene wax has a number average molecular weight (Mn) in the above range, the dispersion of the polyethylene wax to a polyolefin resin in molding tends to be improved. In addition, the extrusion amount tends to be increased, the load at the time of extrusion tends to be reduced and the productivity tends to be more improved. Further, the mechanical properties of the resulting molded product are unlikely to be impaired, compared to those of a molded product obtained without adding the polyethylene wax.

The Mn of the polyethylene wax may be controlled by the polymerization temperature and the like. For example, if the polyethylene wax is produced by using a metallocene catalyst described later, the polymerization temperature is typically 100 to 200°C, but from the viewpoint of producing the polyethylene wax having an Mn in the preferable range, the polymerization temperature is preferably in the range of 100 to 180°C and more preferably 100 to 170°C.

In addition, the polyethylene wax has a density (D ($kg/m^3$)) in the range of 890 to 980 ($kg/m^3$).

When the polyethylene wax is a homopolymer of ethylene, the density of the polyethylene wax depends on the number average molecular weight of the polyethylene wax. For example, if the molecular weight of the polyethylene wax is decreased, the density of the resulting polymer may be controlled to be low. If the polyethylene wax is a copolymer of ethylene and an α-olefin, the density of the polyethylene wax depends on a measure of the number average molecular weight (Mn) and may be controlled by the amount of the α-olefin used to ethylene in polymerization and kinds of the α-olefin. For example, if the amount of the α-olefin to be used to ethylene is increased, the density of the resulting polymer may be reduced.

From the viewpoint of the density of the polyethylene wax, preferred are an ethylene homopolymer, a copolymer of ethylene and an α-olefin having 3 to 20 carbon atoms, or a mixture thereof.

As the α-olefin used for producing the copolymer of the ethylene and α-olefin having 3 to 20 carbon atoms, an α-olefin having 3 to 10 carbon atoms is preferred, propylene, 1-butene, 1-pentene, 1-hexene, 4-methyl-1-pentene and

1-octene are more preferred, and propylene, 1-butene, 1-hexene and 4-methyl-1-pentene are especially preferred.

The α-olefin used for producing the copolymer of the ethylene and an α-olefin is preferably in the range of 0 to 20 mol % based on the total monomers to be used.

In addition, the density of the polyethylene wax may also be controlled by the polymerization temperature. For example, if the polyethylene wax is produced by using a metallocene catalyst described later, the polymerization temperature is typically in the range of 100 to 200°C, but from the viewpoint of producing the polyethylene wax having the density in the preferable range, the polymerization temperature is preferably in the range of 100 to 180°C and more preferably 100 to 170°C.

Such polyethylene wax is solid at normal temperature and a liquid having a low viscosity at 65 to 130°C.

In addition, the polyethylene wax satisfies the relationship between the crystallization temperature [Tc (°C)] as measured by differential scanning calorimetry (DSC) and the density (D ($kg/m^3$)) as measured by the density gradient tube method, preferably represented by the following expression (III), more preferably represented by the following expression (IIIa), and further more preferably represented by the following expression (IIIb):

$$0.501 \times D - 366 \geq Tc \quad \ldots \text{(III)}$$

$$0.501 \times D - 366.5 \geq Tc \quad \ldots \text{(IIIa)}$$

$$0.501 \times D - 367 \geq Tc \quad \ldots \text{(IIIb)}.$$

If, the crystallization temperature (Tc) and the density (D) satisfy the relationship represented by the above expressions in the polyethylene wax, the dipsersibility of the polyethylene wax to the polyolefin resin tends to be improved.

The polyethylene wax satisfying the relationship represented by the expressions may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.

Further, the polyethylene wax satisfying the relationship represented by the expression may be also prepared by controlling the polymerization temperature. For example, when a polyethylene wax is produced using a metallocene catalyst described later, the polymerization temperature is typically in the range of 100 to 200°C, but from the viewpoint of producing a polyethylene wax having the B value, the polymerization temperature is preferably in the range of 100 to 180°C and more preferably in the range of 100 to 170°C.

As a suitable metallocen catalyst in the present invention, there may be mentioned, for example, a catalyst for olefin polymerization composed of:

(A) a metallocene compound of a transition metal selected from Group 4 of the periodic table, and
(B) at least one or more kinds of compounds selected from

 (b-1) an organoaluminum oxy-compound,
 (b-2) a compound which reacts with the bridged metallocene compound (A) to form an ion pair, and
 (b-3) an organoaluminum compound.

Hereinafter, these compounds are explained in detail.

<Metallocene Compound>

(A) Metallocene Compound of Transition Metal Selected from Group 4 of the Periodic Table>

The metallocene compound forming a metallocene catalyst is a metallocene compound of a transition metal selected from Group 4 of the periodic table, and the specific example includes a compound represented by the following general formula (1).

$M^1Lx$ (1)

In the formula (1), $M^1$ is a transition metal selected from Group 4 of the periodic table, x is a valence of the transition metal $M^1$, and L is a ligand. Examples of the transition metals shown by $M^1$ include zirconium, titanium, hafnium and the like. L is a ligand coordinated to the transition metal $M^1$, at least one of which is a ligand having a cyclopentadienyl skeleton. This ligand having a cyclopentadienyl skeleton may have a substituent.

Examples of the ligands L having a cyclopentadienyl skeleton include, for example, an alkyl- or cycloalkyl-substituted cyclopentadienyl groups such as a cyclopentadienyl group, a methylcyclopentadienyl group, an ethylcyclopentadienyl group, an n-, or i-propylcyclopentadienyl group, an n-, i-, sec-, or t-butylcyclopentadienyl group, a dimethylcyclopentadienyl group, a methylpropylcyclopentadienyl group, a methylbutylcyclopentadienyl group, and a methylbenzylcyclopentadienyl group and the like; an indenyl group; a 4,5,6,7-tetrahydroindenyl group; a fluorenyl group; and others. The hydrogen of the ligand having a cyclopentadienyl skeleton may be replaced by a halogen atom or a trialkylsilyl group, or the like.

When the metallocene compound has two or more ligands having a cyclopentadienyl skeleton as the ligand L, two of which having a cyclopentadienyl skeleton may be bonded to each other through an alkylene group such as ethylene, propylene and the like; a substituted alkylene group such as isopropylidene, diphenylmethylene and the like; a substituted silylene group such as a silylene group, a dimethylsilylene group, a diphenylsilylene group, a methylphenylsilylene group or the like.

As the ligand L (ligand having no cyclopentadienyl skeleton) other than the ligand having a cyclopentadienyl skeleton, a hydrocarbon group having 1 to 12 carbon atoms, an alkoxy group, an aryloxy group, a sulfonic acid-containing group ($-SO_3R^1$), a halogen atom or a hydrogen atom or the like (wherein, $R^1$ is an alkyl group, an alkyl group substituted with a halogen atom, an aryl group, an aryl group substituted with a halogen atom or an aryl group substituted with an alkyl group) may be mentioned.

<Example of Metallocene Compound -1>

When the metallocene compound represented by the general formula (1) has a transition metal valence of, for example, 4, the metallocene compound (1) is more specifically represented by the following general formula (2).

$$R^2_kR^3_lR^4_mR^5_nM^1 \qquad (2)$$

In the formula (2), $M^1$ is a transition metal selected from Group 4 of the periodic table, $R^2$ is a group (ligand) having a cyclopentadienyl skeleton, and $R^3$, $R^4$ and $R^5$ are each independently a group (ligand) having or not having a cyclopentadienyl skeleton, k is an integer of 1 or more, and k+l+m+n=4.

As the example of the metallocene compounds having zirconium as $M^1$ and having at least two ligands having a cyclopentadienyl skeleton, bis(cyclopentadienyl)zirconium monochloride monohydride, bis(cyclopentadienyl)zirconium dichloride, bis(1-methyl-3-butylcyclopentadienyl)zirconium-bis(trifluorom ethanesulfonate),bis(1,3-dimethylcyclopentadienyl)zirconium dichloride, and the like may be mentioned.

Among the compounds, a compound in which a 1,3-position substituted cyclopentadienyl group is replaced by a 1,2-position substituted cyclopentadienyl group may be used.

In addition, as another example of the metallocene compound, a metallocene compound of bridge type may be used, in which at least two of $R^2$, $R^3$, $R^4$ and $R^5$ in the formula (2), for example, $R^2$ and $R^3$ are groups (ligands) having a cyclopentadienyl skeleton and these two groups are bonded to each other through an alkylene group, a substituted alkylene group, a silylene group, a substituted silylene group, or the like. In this case, $R^4$ and $R^5$ are each independently the same as the ligand L other than the ligand having a cyclopentadienyl skeleton.

The metallocene compounds of bridge type include ethylenebis(indenyl)dimethylzirconium, ethylenebis(indenyl)zirconium dichloride, isopropylidene(cyclopentadienyl-fluorenyl)zirconium dichloride, diphenylsilylenebis(indenyl)zirconium dichloride, methylphenylsilylenebis(indenyl)zirconium dichloride, and the like.

<Example of Metallocene Compound -2>

Another example of the metallocene compound includes a metallocene compound represented by the following general formula (3) that is described in Japanese Patent Laid-Open Publication No. H04-268307.

[Chemical Formula 1]

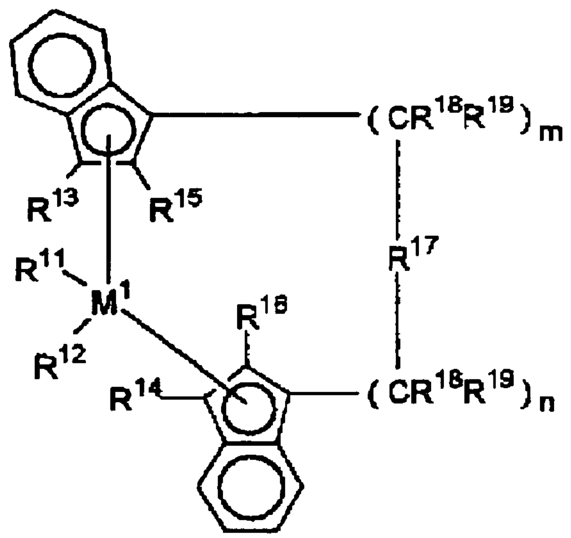

... (3)

In the formula (3), $M^1$ is a transition metal of Group 4 of the periodic table, specifically is titanium, zirconium, or hafnium.

$R^{11}$ and $R^{12}$ may be the same or different from each other and are a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkyl group having 7 to 40 carbon atoms; an alkylaryl group having 7 to 40 carbon atoms; an arylalkenyl group having 8 to 40 carbon atoms; or a halogen atom. $R^{11}$ and $R^{12}$ are preferably a chlorine atom.

$R^{13}$ and $R^{14}$ may be the same or different from each other and are a hydrogen atom; a halogen atom; an alkyl group having 1 to 10 carbon atoms which may be halogenated; an aryl group having 6 to 10 carbon atoms or a group of $-N(R^{20})_2$, $-SR^{20}$, $-OSi(R^{20})_3$, $-Si(R^{20})_3$, or $-P(R^{20})_2$. Here, $R^{20}$ is a halogen atom, preferably a chlorine atom; an alkyl group having 1 to 10 carbon atoms, preferably having 1 to 3 carbon atoms; or an aryl group having 6 to 10 carbon atoms, preferably 6 to 8 carbon atoms. $R^{13}$ and $R^{14}$ especially preferably are a hydrogen atom.

$R^{15}$ and $R^{16}$ are the same as $R^{13}$ and $R^{14}$ except that a hydrogen atom is not included and may be the same or different from each other, and are preferably the same. $R^{15}$ and $R^{16}$ are preferably an alkyl group having 1 to 4 carbon atoms which may be halogenated, specifically methyl, ethyl, propyl, isopropyl, butyl, isobutyl, trifluoromethyl or the like, and especially preferred is methyl.

In the general formula (3), $R^{17}$ is selected from the following group:

[Chemical Formula 2]

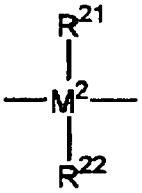 、 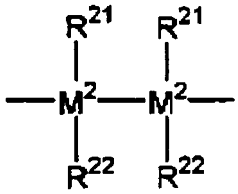 、 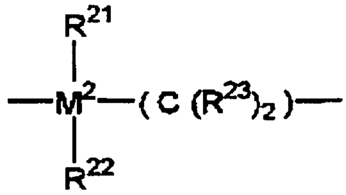 、

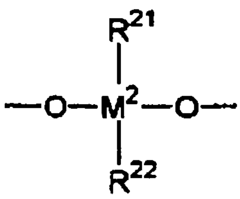 、 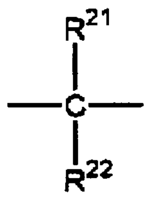 、 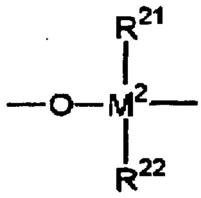 、

$=BR^{21}$, $=AlR^{21}$, -Ge-, -Sn-, -O-, -S-, =SO, $=SO_2$, $=NR^{21}$, =CO, $=PR^{21}$, $=P(O)R^{21}$, and the like. $M^2$ is silicon, germanium or tin, preferably silicon or germanium. $R^{21}$, $R^{22}$ and $R^{23}$ may be the same or different from one another and are a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "$R^{21}$ and $R^{22}$" or "$R^{21}$ and $R^{23}$" may form a ring together with atoms to which each of them is bonded, respectively. In addition, $R^{17}$ is preferably $=CR^{21}R^{22}$, $=SiR^{21}R^{22}$, $=GeR^{21}R^{22}$, -O-, -S-, =SO, $=PR^{21}$ or $=P(O)R^{21}$. $R^{18}$ and $R^{19}$ may be the same or different from each other and are exemplified by the same atom or group as that of $R^{21}$. m and n may be the same or different from each other and are each of them is 0, 1 or 2, preferably 0 or 1, and m+n is 0, 1 or 2, preferably 0 or 1.

As the example of metallocene compounds represented by the above formula (3), there may be mentioned rac-ethylene(2-methyl-1-indenyl)2-zirconium dichloride, rac-dimethylsilylene(2-methyl-1-indenyl)2-zirconium dichloride, and the like. These metallocene compounds may be produced by, for example, a process described in Japanese Patent Laid-Open Publication No. H04-268307.

<Example of Metallocene Compound -3>

In addition, as the metallocene compound, there may be used a metallocene compound represented by the following general formula (4).

[Chemical Formula 3]

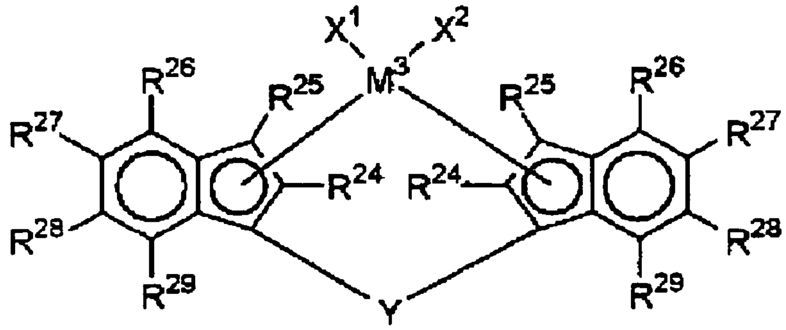

... (4)

In the formula (4), $M^3$ is a transition metal atom of Group 4 of the periodic table, specifically titanium, zirconium, hafnium or the like. $R^{24}$ and $R^{25}$ may be the same or different from each other and are a hydrogen atom, a halogen atom, a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, or a phosphorus-containing group. $R^{24}$ is preferably a hydrocarbon group, especially preferably an alkyl group having 1 to 3 carbon atoms such as methyl, ethyl or propyl group. $R^{25}$ is preferably a hydrogen atom or a hydrocarbon group, particularly preferably a hydrogen atom or an alkyl group having 1 to 3 carbon atoms such as methyl, ethyl or propyl group. $R^{26}$, $R^{27}$, $R^{28}$ and $R^{29}$ may be the same or different from one another and represent a hydrogen atom, a halogen atom, a hydrocarbon group having 1 to 20 carbon atoms, or a halogenated hydrocarbon group having 1 to 20 carbon atoms. Of these, a hydrogen atom, a hydrocarbon group or a halogenated hydrocarbon group is preferred. At least one combination of "$R^{26}$ and $R^{27}$", "$R^{27}$ and $R^{28}$" and "$R^{28}$ and $R^{29}$" may form a monocyclic aromatic ring together with carbon atoms to which each of them is bonded. When there are two or more hydrocarbon groups or halogenated hydrocarbon groups other than the groups that form an aromatic ring, they may be bonded to each other to form a ring. When $R^{29}$ is a substituent other than an aromatic group, it is preferably a hydrogen atom. $X^1$ and $X^2$ may be the same or different from each other and represent a hydrogen atom, a halogen atom, a hydrocarbon group having 1 to 20 carbon atoms, a halogenated hydrocarbon group having 1 to 20 carbon atoms, an oxygen atom-containing group, or a sulfur atom-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{30}-$, $-P(R^{30})-$, $-P(O)(R^{30})-$, $-BR^{30}-$ or $-AlR^{30}-$ (provided that $R^{30}$ is a hydrogen atom, a halogen atom, a hydrocarbon group having 1 to 20 carbon atoms, or a halogenated hydrocarbon group having 1 to 20 carbon atoms).

In the formula (4), as the ligand, which contains a monocyclic aromatic ring formed by mutual bonding of at least one combination of "$R^{26}$ and $R^{27}$", "$R^{27}$ and $R^{28}$" and "$R^{28}$ and $R^{29}$" and which is coordinated to $M^3$, there may be mentioned the ones represented by the following formula (4).

[Chemical Formula 4]

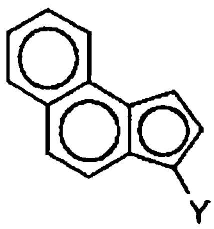

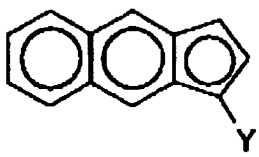

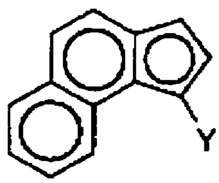

(In the formula (4), Y is the same as that described in the above-mentioned formula).

<Example of Metallocene Compound -4>

As the metallocene compound, there may be used a metallocene compound represented by the following general formula (5).

[Chemical Formula 5]

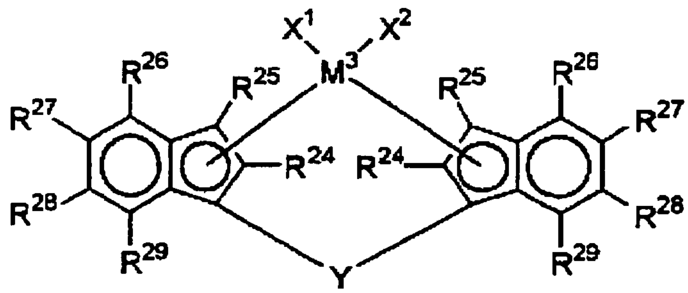

... (5)

In the formula (5), $M^3$, $R^{24}$, $R^{25}$, $R^{26}$, $R^{27}$, $R^{28}$ and $R^{29}$ are the same as those in the formula (4). Of $R^{26}$, $R^{27}$, $R^{28}$ and $R^{29}$, two groups including $R^{26}$ are preferably an alkyl group, and $R^{26}$ and $R^{28}$, or $R^{28}$ and $R^{29}$ are preferably an alkyl group. This alkyl group is preferably a secondary or tertiary alkyl group. Further, this alkyl group may be substituted with a halogen atom or a silicon-containing group. The halogen atoms and the silicon-containing groups include the substituents exemplified in $R^{24}$ and $R^{25}$. Of $R^{26}$, $R^{27}$, $R^{28}$ and $R^{29}$, groups other than the alkyl group are preferably a hydrogen atom. Two groups selected from $R^{26}$, $R^{27}$, $R^{28}$ and $R^{29}$ may be bonded to each other to form a monocycle or a polycycle ring other than the aromatic ring. The halogen atoms include the same atoms as described in $R^{24}$ and $R^{25}$ above. Examples of $X^1$, $X^2$ and Y include the same atoms and groups as described above.

As the specific examples of the metallocene compounds represented by the above formula (5), there may be mentioned rac-dimethylsilylene-bis(4,7-dimethyl-1-indenyl)zirconium dichloride, rac-dimethylsilylene-bis(2,4,7-trimethyl-1-indenyl)zirconium dichloride, rac-dimethylsilylene-bis(2,4,6-trimethyl-1-indenyl)zirconium dichloride, and the like.

In these compounds, a transition metal compound in which the zirconium metal is replaced by a titanium metal or a hafnium metal may also be used. The transition metal compound is usually used as a racemic compound, but an R form or an S form may also be used.

<Example of Metallocene Compound -5>

As the metallocene compound, there may also be used a metallocene compound represented by the following general formula (6).

[Chemical Formula 6]

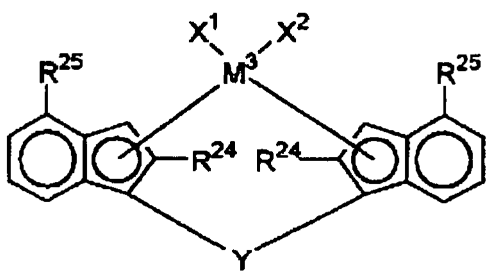

... (6)

In the formula (6), $M^3$, $R^{24}$, $X^1$, $X^2$ and Y are the same as those in the formula (4). $R^{24}$ is preferably a hydrocarbon group,

especially preferably an alkyl group having 1 to 4 carbon atoms such as methyl, ethyl, propyl, or butyl group. $R^{25}$ is an aryl group having 6 to 16 carbon atoms. $R^{25}$ is preferably phenyl or naphthyl. The aryl group may be substituted with a halogen atom, a hydrocarbon group having 1 to 20 carbon atoms, or a halogenated hydrocarbon group having 1 to 20 carbon atoms. $X^1$ and $X^2$ are preferably a halogen atom or a hydrocarbon group having 1 to 20 carbon atoms.

As the specific example of the metallocene compound represented by the formula (6), there may be mentioned rac-dimethylsilylene-bis(4-phenyl-1-indenyl)zirconium dichloride, rac-dimethylsilylene-bis(2-methyl-4-phenyl-1-indenyl) zirconiu m dichloride, rac-dimethylsilylene-bis(2-methyl-4-(α-naphthyl)-1-indenyl) zirconium dichloride, rac-dimethylsilylene-bis(2-methyl-4-(p-naphthyl)-1-indenyl) zirconium dichloride, rac-dimethylsilylene-bis(2-methyl-4-(1-anthryl)-1-indenyl)zir conium dichloride, and the like. In these compounds, a transition metal compound in which the zirconium metal is replaced by a titanium metal or a hafnium metal may also be used.

<Example of Metallocene Compound -6>

Further, as the metallocene compound, a metallocene compound represented by the following general formula (7) may also be used.

$$LaM^4X^3_2 \qquad (7)$$

In the formula (7), $M^4$ is a metal of Group 4 or lanthanide series of the periodic table. La is a derivative of a delocalized π bond group and is a group imparting a constraint geometric shape to the metal $M^4$ active site. $X^3$ may be the same or different from each other and is a hydrogen atom, a halogen atom, a hydrocarbon group having 20 or less carbon atoms, a silyl group having 20 or less silicon atoms or a germyl group having 20 or less germanium atoms.

Of these compounds, a compound represented by the following formula (8) is preferred.

[Chemical Formula 7]

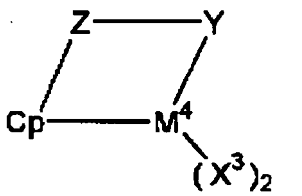

··· (8)

In the formula (8), $M^4$ is titanium, zirconium, or hafnium. $X^3$ is the same as that explained in the formula (7). Cp is π-bonded to $M^4$ and is a substituted cyclopentadienyl group having a substituent Z. Z is oxygen, sulfur, boron, or an element of Group 4 of the periodic table (for example, silicon, germanium or tin). Y is a ligand containing nitrogen, phosphorus, oxygen or sulfur, and Z and Y may together form a condensed ring. As the specific examples of the metallocene compounds represented by the formula (8), there may be mentioned (dimethyl(t-butylamide)(tetramethyl-$\eta^5$-cyclopentadienyl)silan e)titanium dichloride, ((t-butylamide)(tetramethyl-$\eta^5$-cyclopentadienyl)-1,2-ethanedi yl)titanium dichloride, and the like. In addition, in the metallocene compounds a metallocene compound in which titanium is replaced by zirconium or hafnium may be mentioned.

<Example of Metallocene Compound -7>

Further, as the metallocene compound, a metallocene compound represented by the following general formula (9) may also be used.

[Chemical Formula 8]

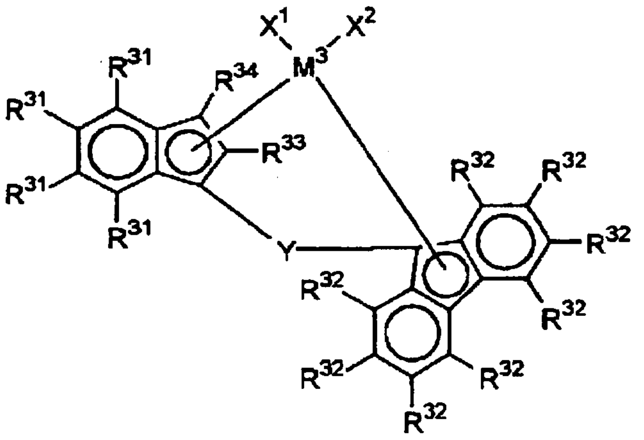

... (9)

In the formula (9), $M^3$ is a transition metal atom of Group 4 of the periodic table, specifically titanium, zirconium, or hafnium, preferably zirconium. $R^{31}$ may be the same or different from each other, and at least one of them is an aryl group having 11 to 20 carbon atoms, an arylalkyl group having 12 to 40 carbon atoms, an arylalkenyl group having 13 to 40 carbon atoms, an alkylaryl group having 12 to 40 carbon atoms, or a silicon-containing group; or at least two adjacent groups of the groups shown by $R^{31}$ form single or plural aromatic rings or aliphatic rings together with carbon atoms to which each of them is bonded. In this case, the ring formed by $R^{31}$ has 4 to 20 carbon atoms in total including carbon atoms to which $R^{31}$ is bonded. $R^{31}$ other than $R^{31}$ that is an aryl group, an arylalkyl group, an arylalkenyl group, or an alkylaryl group and that forms an aromatic ring or an aliphatic ring is a hydrogen atom, a halogen atom, an alkyl group having 1 to 10 carbon atoms or a silicon-containing group. $R^{32}$ may be the same or different from each other and is a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group. In addition, at least two adjacent groups of the groups shown by $R^{32}$ may form single or plural aromatic rings or aliphatic rings together with carbon atoms to which each of them is bonded. In this case, the ring formed by $R^{32}$ has 4 to 20 carbon atoms in total including carbon atoms to which $R^{32}$ is bonded. $R^{32}$ other than $R^{32}$ that forms an aromatic ring or an aliphatic ring is a hydrogen atom, a halogen atom, an alkyl group having 1 to 10 carbon atoms, or a silicon-containing group. Further, in the groups constituted by single or plural aromatic rings or aliphatic rings formed by two groups shown by $R^{32}$, an embodiment in which the fluorenyl group has a structure represented by the following formula is included.

[Chemical Formula 9]

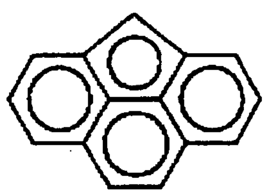

$R^{32}$ is preferably a hydrogen atom or an alkyl group, especially preferably a hydrogen atom or a hydrocarbon group having 1 to 3 carbon atoms such as methyl, ethyl, or propyl group. A preferred example of the fluorenyl group having $R^{32}$ as such a substituent includes a 2,7-dialkyl-fluorenyl group, and in this case, an alkyl group of the 2,7-dialkyl includes an alkyl group having 1 to 5 carbon atoms. $R^{31}$ and $R^{32}$ may be the same or different from each other. $R^{33}$ and $R^{34}$ may be the same or different from each other and are a hydrogen atom, a halogen atom, an alkyl group having 1 to 10 carbon atoms, an aryl group having 6 to 20 carbon atoms, an alkenyl group having 2 to 10 carbon atoms, an arylalkyl group

having 7 to 40 carbon atoms, and arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group, as mentioned in the above. At least one of $R^{33}$ and $R^{34}$ is preferably an alkyl group having 1 to 3 carbon atoms. $X^1$ and $X^2$ may be the same or different from each other and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group, or a conjugated diene residue formed from $X^1$ and $X^2$. As the conjugated diene residues formed from $X^1$ and $X^2$, 1,3-butadiene, 2,4-hexadiene, 1-phenyl-1,3-pentadiene and 1,4-diphenylbutadiene may be preferably mentioned, and these residues may be further substituted with a hydrocarbon group having 1 to 10 carbon atoms. $X^1$ and $X^2$ are preferably a halogen atom, a hydrocarbon group having 1 to 20 carbon atoms or a sulfur-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2$ -, $-NR^{35}$-, $-P(R^{35})$-, $-P(O)(R^{35})$-, $-BR^{35}$- or $-AlR^{35}$- (provided that $R^{35}$ is a hydrogen atom, a halogen atom, a hydrocarbon group having 1 to 20 carbon atoms or a halogenated hydrocarbon group having 1 to 20 carbon atoms). Of these divalent groups, those wherein the shortest linkage part of -Y- is constituted by one or two atoms are preferable. $R^{35}$ is a halogen atom, a hydrocarbon group having 1 to 20 carbon atoms or a halogenated hydrocarbon group having 1 to 20 carbon atoms. Y is preferably a divalent hydrocarbon group having 1 to 5 carbon atoms, a divalent silicon-containing group or a divalent germanium-containing group, more preferably a divalent silicon-containing group, and especially preferably alkylsilylene, alkylarylsilylene or arylsilylene.

<Example of Metallocene Compound -8)

Further, as the metallocene compound, a metallocene compound represented by the following general formula (10) may be also used.

[Chemical Formula 10]

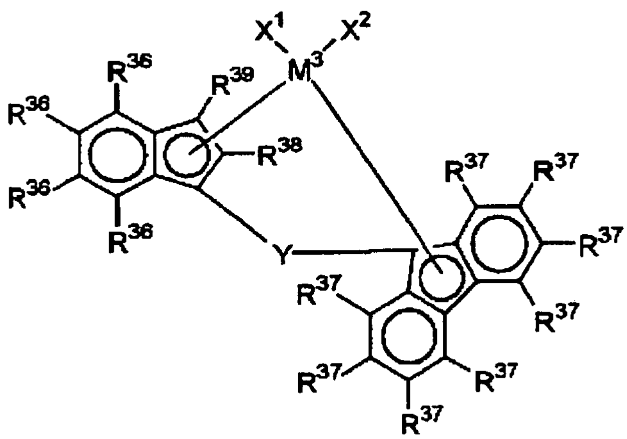

... (1 0)

In the formula (10), $M^3$ is a transition metal atom of Group 4 of the periodic table, specifically titanium, zirconium or hafnium, and preferably zirconium. $R^{36}$ may be the same or different from each other and is a hydrogen atom, a halogen atom, an alkyl group having 1 to 10 carbon atoms, an aryl group having 6 to 10 carbon atoms, an alkenyl group having 2 to 10 carbon atoms, a silicon-containing group, an oxygen-containing group, a sulfur-containing group, a nitrogen-containing group or a phosphorus-containing group. Further, the alkyl group and the alkenyl group may be substituted with a halogen atom. Of these, $R^{36}$ is preferably an alkyl group, an aryl group or a hydrogen atom, especially preferably a hydrocarbon group having 1 to 3 carbon atoms such as methyl, ethyl, n-propyl or i-propyl, an aryl group such as phenyl, $\alpha$-naphthyl or $\beta$-naphthyl group, or a hydrogen atom. $R^{37}$ may be the same or different from each other and is a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing

group, a sulfur-containing group, a nitrogen-containing group or a phosphorus-containing group. Further, the alkyl group, the aryl group, the alkenyl group, the arylalkyl group, the arylalkenyl group and the alkylaryl group may be substituted with halogen. Of these, $R^{37}$ is preferably a hydrogen atom or an alkyl group, especially preferably a hydrogen atom or a hydrocarbon group having 1 to 4 carbon atoms such as methyl, ethyl, n-propyl, i-propyl, n-butyl or tert-butyl group. In addition, the above $R^{36}$ and $R^{37}$ may be the same or different from each other. Either one of $R^{38}$ and $R^{39}$ is an alkyl group having 1 to 5 carbon atoms, and the other is a hydrogen atom, a halogen atom, an alkyl group having 1 to 10 carbon atoms, an alkenyl group having 2 to 10 carbon atoms, a silicon-containing group, an oxygen-containing group, a sulfur-containing group, a nitrogen-containing group or a phosphorus-containing group. Either one of $R^{38}$ or $R^{39}$ is preferably an alkyl group having 1 to 3 carbon atoms such as methyl, ethyl or propyl group, and either the other is preferably a hydrogen atom. $X^1$ and $X^2$ may be the same or different from each other and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group, or a conjugated diene residue formed by $X^1$ and $X^2$. Of these, a halogen atom or a hydrocarbon group having 1 to 20 carbon atoms is preferred. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$ $-NR^{40}-$, $-P(R^{40})-$, $-P(O)(R^{40})-$, $-BR^{40}-$ or $-AlR^{40}-$ (provided that $R^{40}$ is a hydrogen atom, a halogen atom, a hydrocarbon group having 1 to 20 carbon atoms or a halogenated hydrocarbon group having 1 to 20 carbon atoms). Of these, Y is preferably a divalent hydrocarbon group having 1 to 5 carbon atoms, a divalent silicon-containing group or a divalent germanium-containing group, more preferably a divalent silicon-containing group, and especially preferably alkylsilylene, alkylarylsilylene or arylsilylene.

<Example of Metallocene Compound -9)

Further, as the metallocene compound, a metallocene compound represented by the following general formula (11) may be also used.

[Chemical Formula 11]

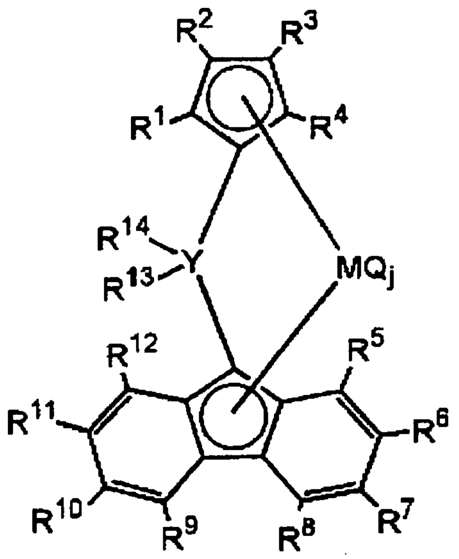

··· (1 1)

In the formula (11), Y is selected from carbon, silicon, germanium and tin atoms, M is Ti, Zr or Hf, and $R^1$, $R^2$, $R^3$, $R^4$, $R^5$, $R^6$, $R^7$, $R^8$, $R^9$, $R^{10}$, $R^{11}$ and $R^{12}$ may be the same or different from one another and are selected from hydrogen, a hydrocarbon group, and a silicon containing group, and the adjacent substituents of $R^5$ to $R^{12}$ may be bonded to one another to form a ring. $R^{13}$ and $R^{14}$ may be the same or different from each other and are selected from a hydrocarbon group, and a silicon containing group, and $R^{13}$ and $R^{14}$ may be bonded to each other to form a ring. Q may be selected in the same or different combination from halogen, a hydrocarbon group, an anionic ligand and a neutral ligand that can be coordinated with a lone pair of electrons, and j is an integer of 1 to 4.

Hereinafter, the cyclopentadienyl group, the fluorenyl group and the bridged part which are the characteristics in the

chemical structure of the bridged metallocene compound relating to the present invention and other characteristics are explained in this order, and then preferred metallocene compounds having these characteristics in combination are explained.

Cyclopentadienyl Group

The cyclopentadienyl group may or may not be substituted. The phrase "the cyclopentadienyl group which may not be substituted" means a cyclopentadienyl group in which $R^1$, $R^2$, $R^3$ and $R^4$ which the cyclopentadienyl group part in the general formula (11) has are all hydrogen atoms, or any one or more of $R^1$, $R^2$, $R^3$ and $R^4$ are substituted with a hydrocarbon group (f1), preferably with a hydrocarbon group (f1') having the total number of carbon atoms of 1 to 20 or a silicon-containing group (f2), or preferably with a silicon-containing group (f2') having the total number of carbon atoms of 1 to 20. If two or more of $R^1$, $R^2$, $R^3$ and $R^4$ are substituted, the substituents may be the same or different from each other. Further, the term "hydrocarbon group having the total number of carbon atoms of 1 to 20" means an alkyl group, an alkenyl group, an alkynyl group, or an aryl group, which is composed of only carbon and hydrogen. Among these, a group in which both of any two adjacent hydrogen atoms are simultaneously substituted to form an alicyclic or aromatic ring is included. As the hydrocarbon group (f1') having the total number of carbon atoms of 1 to 20, in addition to an alkyl group, an alkenyl group, an alkynyl group, or an aryl group which is composed of only carbon and hydrogen, a heteroatom-containing hydrocarbon group in which a part of the hydrogen atoms directly bonded to the carbon atoms is substituted with a halogen atom, an oxygen-containing group, a nitrogen-containing group or a silicon-containing group, and a group in which any adjacent two hydrogen atoms form an alicyclic group are included. The hydrocarbon group (f1') includes a linear hydrocarbon group such as a methyl group, an ethyl group, an n-propyl group, an allyl group, an n-butyl group, an n-pentyl group, an n-hexyl group, an n-heptyl group, an n-octyl group, an n-nonyl group, an n-decanyl group and the like; a branched hydrocarbon group such as an isopropyl group, a t-butyl group, an amyl group, a 3-methylpentyl group, a 1,1-diethylpropyl group, a 1,1-dimethylbutyl group, a 1-methyl-1-propyl butyl group, a 1,1-propyl butyl group, a 1,1-dimethyl-2-methylpropyl group, a 1-methyl-1-isopropyl-2-methylpropyl group and the like; a cyclic saturated hydrocarbon group such as cyclopentyl group, cyclohexyl group, cycloheptyl group, cyclooctyl group, norbornyl group, adamanthyl group and the like; a cyclic unsaturated hydrocarbon group and a nuclear alkyl-substituted product thereof such as a phenyl group, a naphthyl group, a biphenyl group, a phenanthryl group, an anthracenyl group and the like; a saturated hydrocarbons group substituted with an aryl group such as a benzyl group, a cumyl group and the like; and a heteroatom-containing hydrocarbon group such as a methoxy group, an ethoxy group, a phenoxy group, an N-methylamino group, a trifluoromethyl group, a tribromomethyl group, a pentafluoroethyl group, a pentafluorophenyl group and the like.

The silicon-containing group (f2) refers, for example, to a group in which the ring carbon of the cyclopentadienyl group is directly covalently bonded to a silicon atom, and specifically to an alkyl silyl group and an aryl silyl group. The silicon-containing group (f2') having the total number of carbon atoms of 1 to 20 includes a trimethylsilyl group, a triphenylsilyl group and the like.

Fluorenyl Group

The fluorenyl group may or may not be substituted. The phrase "the fluorenyl group which may or may not be substituted" means a fluorenyl group in which $R^5$, $R^6$, $R^7$, $R^8$, $R^9$, $R^{10}$, $R^{11}$ and $R^{12}$ which the fluorenyl group part in the general formula (11) has are all hydrogen atoms, or any one or more of $R^5$, $R^6$, $R^7$, $R^8$, $R^9$, $R^{10}$, $R^{11}$ and $R^{12}$ are substituted with a hydrocarbon group (f1), preferably with a hydrocarbon group (f1') having the total number of carbon atoms of 1 to 20 or a silicon-containing group (f2), or preferably with a silicon-containing group (f2') having the total number of carbon atoms of 1 to 20. If two or more of $R^5$, $R^6$, $R^7$, $R^8$, $R^9$, $R^{10}$, $R^{11}$ and $R^{12}$ are substituted, these substituents may be the same or different from each other. The adjacent groups of $R^5$, $R^6$, $R^7$, $R^8$, $R^9$, $R^{10}$, $R^{11}$ and $R^{12}$ may be bonded to one another to form a ring. A fluorenyl group in which $R^6$ and $R^{11}$, and $R^7$ and $R^{10}$ are the same each other is preferably used, because of the easiness in the production of a catalyst.

A preferable example of the hydrocarbon group (f1) is a hydrocarbon group (f1') having the total number of carbon atoms of 1 to 20, and a preferable example of the silicon-containing group (f2) is a silicon-containing group (f2') having the total number of carbon atoms of 1 to 20 carbon atoms.

Covalent Bond Bridging

The main chain of the bond bonding the cyclopentadienyl group and the fluorenyl group is a divalent covalent bond bridging containing a carbon atom, a silicon atom, a germanium atom and a tin atom. An important point in a high temperature solution polymerization of the present invention is that a bridging atom Y of the covalent bond bridging part has $R^{13}$ and $R^{14}$ which may be the same or different from each other. A preferable example of the hydrocarbon group

(f1) is a hydrocarbon group (f1') having the total number of carbon atoms of 1 to 20, and a preferable example of the silicon-containing group (f2) is a silicon-containing group (f2') having the total number of carbon atoms of 1 to 20.

Other Characteristics of Bridged Metallocene Compound

In the formula (11), Q is selected in the same or different combination from halogen, a hydrocarbon group having 1 to 10 carbon atoms, a neutral, conjugated or non-conjugated diene having 10 or less carbon atoms, an anionic ligand, or a neutral ligand which can be coordinated by a lone pair of electrons. The specific example of halogen includes fluorine, chlorine, bromine and iodine, and the specific example of the hydrocarbon group includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl, and the like. As the specific example of the neutral, conjugated or non-conjugated diene having 10 or less carbon atoms, there may be mentioned s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, and s-cis- or s-trans-$\eta^4$-1,4-bis (trimethylsilyl) -1, 3-butadiene, and the like. The specific example of the anionic ligand includes an alkoxy group such as methoxy, tert-butoxy, phenoxy and the like; a carboxylate group such as acetate, benzoate and the like; a sulfonate group such as mesylate, tosylate and the like; and others. As the specific example of the neutral ligand which can be coordinated by a lone pair of electrons, there may be mentioned an organophosphorus compound such as trimethylphosphine, triethylphosphine, triphenylphosphine, diphenylmethyl phosphine and the like, or ethers such as tetrahydrofuran, diethyl ether, dioxane, 1,2-dimethoxyethane and the like. j is an integer of 1 to 4, and when j is 2 or more, Q may be the same or different from each other.

<Example of Metallocene Compound -10>

In addition, as the metallocene compound, a metallocene compound represented by the following general formula (12) may be also used.

[Chemical Formula 12]

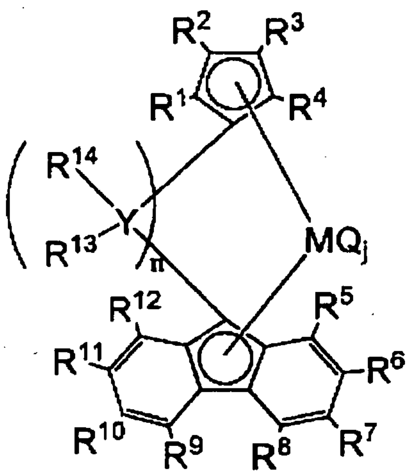

... (1 2)

In the formula (12), $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ are selected from hydrogen, a hydrocarbon group and a silicon-containing group and may be the same or different from one another. The adjacent substituents of $R^1$ to $R^{14}$ may be bonded to each other to form a ring, M is Ti, Zr or Hf, Y is an atom of Group 14 of the periodic table, Q is selected in the same or different combination from the group consisting of halogen, a hydrocarbon group, a neutral, conjugated or non-conjugated diene having 10 or less carbon atoms, an anionic ligand, and a neutral ligand which can be coordinated by a lone pair of electrons, n is an integer of 2 to 4, and j is an integer of 1 to 4.

In the above general formula (12), the hydrocarbon group preferably includes an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more ring structures.

The specific example thereof includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethyl butyl, neopentyl, cyclohexylmethyl, cyclohexyl, 1-methyl-1-cyclohexyl, 1-adamanthyl, 2-adamanthyl, 2-methyl-2-adamanthyl, menthyl, norbornyl, benzyl, 2-phenylethyl, 1-tetrahydronaphthyl, 1-methyl-1-tetrahydronaphthyl, phenyl, naphthyl, tolyl, and the like.

In the above general formula (12), the silicon-containing hydrocarbon group preferably includes an alkyl or arylsilyl group having 1 to 4 silicon atoms and 3 to 20 carbon atoms, and the specific example thereof includes trimethylsilyl, tert-butyldimethylsilyl, triphenylsilyl, and the like.

In the present invention, $R^1$ to $R^{14}$ of the general formula (12) are selected from hydrogen, a hydrocarbon group and a silicon-containing hydrocarbon group, and may be the same or different from one another. As the preferable specific example of the hydrocarbon group and the silicon-containing hydrocarbon group, those mentioned in the above are included.

The adjacent substituents of $R^1$ to $R^{14}$ on the cyclopentadienyl ring of the general formula (12) may be bonded to each other to form a ring.

M of the general formula (12) is an element of Group 4 of the periodic table, that is, zirconium, titanium or hafnium, and preferably zirconium.

Y is an atom of Group 14 of the periodic table, preferably a carbon atom or a silicon atom. n is an integer of 2 to 4, preferably 2 to 3, and especially preferably 2.

Q is selected in the same or different combination from the group consisting of halogen, a hydrocarbon group, a neutral, conjugated or non-conjugated diene having 10 or less carbon atoms, an anionic ligand, and a neutral ligand which can be coordinated by a lone pair of electrons. When Q is a hydrocarbon group, more preferred is a hydrocarbon group having 1 to 10 carbon atoms.

The specific example of halogen includes fluorine, chlorine, bromine, and iodine, and the specific example of the hydrocarbon group includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl and the like. As the specific example of the neutral, conjugated or non-conjugated diene having 10 or less carbon atoms, there may be mentioned s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis(trimethylsilyl)-1,3-butadiene and the like. The specific example of the anionic ligand includes an alkoxy group such as methoxy, tert-butoxy, phenoxy and the like; a carboxylate group such as acetate, benzoate and the like; a sulfonate group such as mesylate, tosylate and the like; and others. As the specific example of the neutral ligand which can be coordinated by a lone pair of electrons, there may be mentioned an organophosphorus compound such as trimethylphosphine, triethylphosphine, triphenylphosphine, diphenylmethyl phosphine and the like, or ethers such as tetrahydrofuran, diethyl ether, dioxane, 1,2-dimethoxyethane and the like, or the like. When j is an integer of 2 or more, plural Q may be the same or different from each other.

In the formula (12), Y is present in the plurality of 2 to 4, and the plural Y may be the same as or different from each other. Plural $R^{13}$ and plural $R^{14}$, which are bonded to Y, may be the same or different from each other. For example, plural $R^{13}$ which are bonded to the same Y may be different from each other, and plural $R^{13}$ which are bonded to the different Y may be the same each other. In addition, a ring may be formed between the plural $R^{13}$ or the plural $R^{14}$.

As the preferred example of a Group 4 transition metal compound represented by the formula (12), a compound represented by the following formula (13) may be mentioned.

[Chemical Formula 13]

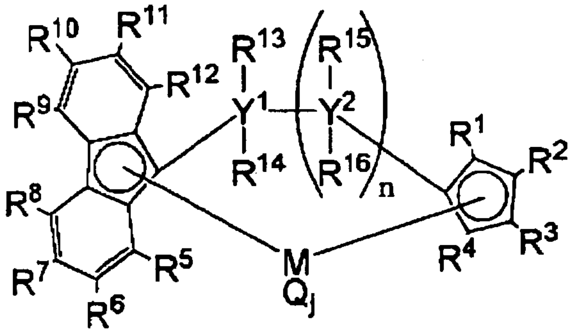

··· (1 3)

In the formula (13), $R^1$, $R^2$, $R^3$, $R^4$, $R^5$, $R^6$, $R^7$, $R^8$, $R^9$, $R^{10}$, $R^{11}$ and $R^{12}$ are selected from a hydrogen atom, a hydrocarbon group, and a silicon containing group, and may be the same or different from each other, and $R^{13}$, $R^{14}$, $R^{15}$ and $R^{16}$ are a hydrogen atom or a hydrocarbon group, and n is an integer of 1 to 3. When n is 1, the above $R^1$ to $R^{16}$ are not a hydrogen atom at the same time and may be the same or different from one another. The adjacent substituents of $R^5$ to $R^{12}$ may be bonded to each other to form a ring. Further, $R^{13}$ and $R^{15}$ may be bonded to each other to form a ring, in addition, $R^{13}$ and $R^{15}$ may be bonded to each other to form a ring and at the same time $R^{14}$ and $R^{16}$ may be bonded to each other to form a ring. $Y^1$ and $Y^2$ are atoms of Group 14 of the periodic table and may be the same or different from each other. M is Ti, Zr or Hf. Q may be selected in the same or different combination from halogen, a hydrocarbon group, an anionic ligand, and a neutral ligand which can be coordinated by a lone pair of electrons, and j is an integer of 1 to 4.

The compounds as described in Examples of Metallocene Compound 9 and 10 are disclosed in Japanese Patent Laid-Open Publication No. 2004-175707, WO2001/027124, WO2004/029062, WO2004/083265 and the like.

The metallocene compounds explained above are used alone or in combination of two or more kinds. In addition, the metallocene compounds may be used after diluted with hydrocarbon, halogenated hydrocarbon or the like.

The catalyst component is composed of a bridged metallocene compound represented by the (A) and at least one compound (B) selected from an organoaluminum oxy-compound (b-1), a compound which reacts with the bridged metallocene compound (A) to form an ion pair (b-2) and an organoaluminum compound (b-3).

Hereinafter, the component (B) is specifically explained.

<Organoaluminum Oxy-Compound(b-1)>

As the organoaluminum oxy-compound (b-1) used in the present invention, a conventionally well-known aluminoxane may be used as it is. Specifically, there may be mentioned a compound represented by the following general formula (14)

[Chemical Formula 14]

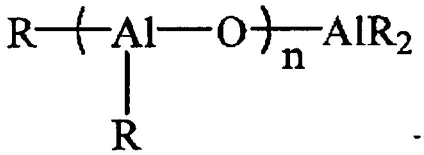

-------------- (1 4)

and/or by the following general formula (15)

[Chemical Formula 15]

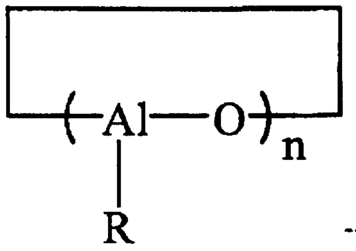

(15)

(wherein R represents a hydrocarbon group having 1 to 10 carbon atoms, and n represents an integer of 2 or more.) Particularly, a methyl aluminoxane in which R is a methyl group and n is 3 or more, preferably 10 or more is used. Some organoaluminum compounds may be incorporated in these aluminoxanes. In addition, the high temperature solution polymerization of the present invention is characterized in that the benzene-insoluble organoaluminum oxy-compound exemplified in Japanese Patent Laid-Open Publication No. H02-78687 may be also employed. Further, there may be suitably used the benzene-insoluble organoaluminum oxy-compound described in Japanese Patent Laid-Open Publication No. H02-167305, the aluminoxane having two or more kinds of alkyl groups described in Japanese Patent Laid-Open Publication No. H02-24701 and Japanese Patent Laid-Open Publication No. H03-103407. In addition, the "benzene-insoluble" organoaluminum oxy-compound used in the high temperature solution polymerization of the present invention means that the Al component dissolved in benzene at 60°C in terms of an Al atom is usually 10% or less, preferably 5% or less and especially preferably 2% or less, and that the compound is insoluble or poorly soluble in benzene.

Further, as the organoaluminum oxy-compound used in the present invention, a modified methyl aluminoxane represented by the following formula (16) and the like may be mentioned.

[Chemical Formula 16]

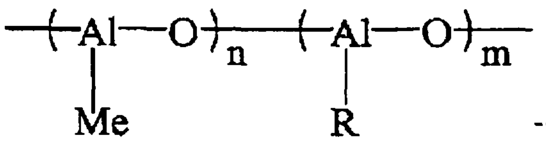

(16)

(wherein, R represents a hydrocarbon group having 1 to 10 carbon atoms and m and n represent each an integer of 2 or more.) The modified methyl aluminoxane is prepared using trimethyl aluminum and alkyl aluminum other than trimethyl aluminum. Such compound [V] is generally referred to as MMAO. Such MMAO is prepared by the process described in US4960878 and US5041584. Further, the modified methyl aluminoxane, in which R is an isobutyl group and which is prepared using trimethyl aluminum and tri-isobutyl aluminum, is commercially produced under the trade name of MMAO or TMAO by Tosoh Finechem Corporation and the like. The MMAO is aluminoxane which is improved in solubility in various kinds of solvents, and storage stability, and specifically, it is dissolved in an aliphatic or alicyclic hydrocarbon, unlike the aluminoxane of the (14) or (15) which is insoluble or poorly soluble in benzene.

Further, as the organoaluminum oxy-compound used in the present invention, a boron-containing organoaluminum oxy compound represented by the following general formula (17) may be also mentioned.

[Chemical Formula 17]

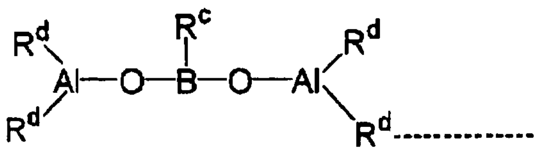
(17)

(In the formula (17), $R^c$ represents a hydrocarbon group having 1 to 10 carbon atoms, and $R^d$ may be the same or different from each other and represent a hydrogen atom, a halogen atom or a hydrocarbon group having 1 to 10 carbon atoms).

<Compound which reacts with Bridged Metallocene Compound (A) to form Ion Pair (b-2)>

As the compound (b-2) which reacts with the bridged metallocene compound (A) to form an ion pair (hereinafter, may be abbreviated as an "ionic compound"), a Lewis acid, an ionic compound, a borane compound, carborane compound and the like may be mentioned, which are described in Japanese Patent Laid-Open Publication No. H01-501950, Japanese Patent Laid-Open Publication No. H01-502036, Japanese Patent Laid-Open Publication No. H03-179005, Japanese Patent Laid-Open Publication No. H03-179006, Japanese Patent Laid-Open Publication No. 03-207703, Japanese Patent Laid-Open Publication No. H03-207704, US5321106 and the like. In addition, a heteropoly compound and an isopoly compound may be mentioned.

In the present invention, the ionic compound which is preferably employed is a compound represented by the following general formula (18).

[Chemical Formula 18]

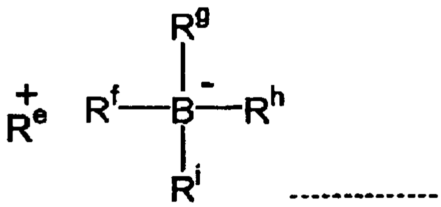
(18)

In the formula (18), $R^{e+}$ includes $H^+$, a carbenium cation, an oxonium cation, an ammonium cation, a phosphonium cation, a cycloheptyltrienyl cation, and a ferrocenium cation having a transition metal. $R^f$ to $R^i$ may be the same or different from one another and each represent an organic group, preferably an aryl group.

As the specific example of the carbenium cation, there may be mentioned 3-substituted carbenium cations such as a triphenyl carbenium cation, a tris(methylphenyl)carbenium cation, a tris(dimethylphenyl)carbenium cation and the like; and others.

As the specific example of the ammonium cation, there may be mentioned a trialkyl ammonium cation such as a trimethyl ammonium cation, a triethyl ammonium cation, a tri(n-propyl)ammonium cation, a tri-isopropyl ammonium cation, a tri (n-butyl) ammonium cation, a tri-isobutyl ammonium cation and the like; an N,N-dialkyl anilinium cation such as an N,N-dimethyl anilinium cation, an N,N-diethyl anilinium cation, an N,N-2,4,6-pentamethyl anilinium cation and the like; a dialkyl ammonium cation such as a diisopropyl ammonium cation, a dicyclohexyl ammonium cation and the like; and others.

As the specific example of the phosphonium cation, there may be mentioned a triarylphosphonium cation such as a triphenylphosphonium cation, tris(methylphenyl)phosphonium cation, tris(dimethylphenyl)phosphonium cation and the like; and others.

Among them, $R^{e+}$ is preferably a carbenium cation, an ammonium cation, and the like, and especially preferably a triphenylcarbenium cation, a N,N-dimethyl anilinium cation, and an N,N-diethyl anilinium cation.

As the specific example of the carbenium salts, there may be mentioned triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate, tris(3,5-dimethylphenyl)carbenium tetrakis(pentafluorophenyl)borate, and the like.

The ammonium salt includes a trialkyl-substituted ammonium salt, an N,N-dialkyl anilinium salt, a dialkyl ammonium salt, and the like.

As the specific example of the trialkyl-substituted ammonium salt, there may be mentioned, for example, triethylammonium tetraphenylborate, tripropylammonium tetraphenylborate, tri (n-butyl)ammonium tetraphenylborate, trimethylammonium tetrakis(p-tolyl)borate, trimethylammonium tetrakis(o-tolyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl) borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecyl methyl ammonium tetraphenyl borate, dioctadecyl methyl ammonium tetrakis(p-tolyl)borate, dioctadecyl methyl ammonium tetrakis(o-tolyl)borate, dioctadecyl methyl ammonium tetrakis(pentafluorophenyl)borate, dioctadecyl methyl ammonium tetrakis(2,4-dimethylphenyl)borate, dioctadecyl methyl ammonium tetrakis(3,5-dimethylphenyl)borate, dioctadecyl methyl ammonium tetrakis(4-trifluoromethylphenyl)borate, dioctadecyl methyl ammonium tetrakis(3,5-ditrifluoromethylphenyl)borate, dioctadecyl methyl ammonium, and the like.

As the specific example of the N,N-dialkylanilinium salt, there may be mentioned, for example, N,N-dimethylanilinium tetraphenylborate, N,N-dimethylanilinium tetrakis(pentafluorophenyl)borate, N,N-dimethylanilinium tetrakis (3,5-ditrifluoromethylphenyl)borate, N,N-diethylanilinium tetraphenylborate, N,N-diethyl anilinium tetrakis(pentafluorophenyl)borate, N,N-diethylanilinium tetrakis(3,5-ditrifluoromethylphenyl)borate, N,N-2,4,6-pentamethylanilinium tetraphenylborate, N,N-2,4,6-pentamethylanilinium tetrakis(pentafluorophenyl)borate, and the like.

The dialkylammonium salt specifically includes, for example, di(1-propyl)ammonium tetrakis(pentafluorophenyl) borate, dicyclohexylammonium tetraphenylborate, and the like.

In addition to the above, the ionic compounds disclosed by the present applicant in Japanese Patent Laid-Open Publication No. 2004-51676 may be also used without any restriction.

In addition, the ionic compounds (b-2) as mentioned above may be used by mixing two or more kinds.

<Organoaluminum Compound (b-3)>

As the organoaluminum compound (b-3) which forms an olefin polymerization catalyst, there may be mentioned, for example, an organoaluminum compound represented by the following general formula [X], a complex alkylated compound between a metal element of Group 1 of the periodic table and aluminum represented by the following general formula (19), and the like.

$$R^{a}mAl\ (OR^{b})_{n}H_{p}X_{q} \qquad (19)$$

(In the formula (19), $R^a$ and $R^b$ are may be the same or different from each other and each represent a hydrocarbon group having 1 to 15 carbon atoms, preferably 1 to 4 carbon atoms, X represents a halogen atom, and m, n, p, and q are $0<m\leq3$, $0\leq n<3$, $0\leq p<3$, and $0\leq q<3$, and $m+n+p+q=3$.) The specific examples of such compounds include tri-n-alkylaluminum such as trimethylaluminum, triethylaluminum, tri-n-butylaluminum, trihexylaluminum, trioctylaluminum and the like; tri-branched alkylaluminum such as triisopropylaluminum, triisobutylaluminum, tri-sec-butylaluminum, tri-tert-butylaluminum, tri-2-methylbutylaluminum, tri-3-methylhexylaluminum, tri-2-ethylhexylaluminum and the like; tri-cycloalkylaluminum such as tri-cyclohexyl aluminum, and tri-cyclooctylaluminum and the like; triarylaluminum such as triphenylaluminum, tritolylaluminum and the like; dialkylaluminum hydride such as diisopropylaluminum hydride, diisobutylaluminum hydride and the like; alkenylaluminum such as isoprenylaluminum represented by the general formula: $(i\text{-}C_4H_9)_xAly(C_5H_{10})_z$ (wherein x, y and z are a positive integer and $z\leq2x$); alkylaluminum alkoxide such as isobutylaluminum methoxide, isobutylaluminum ethoxide and the like; dialkylaluminum alkoxide such as dimethylaluminum methoxide, diethylaluminum ethoxide, dibutylaluminum butoxide and the like; alkylaluminum sesquialkoxide such as ethylaluminum sesquiethoxide, butylaluminum sesquibutoxide and the like; partially alkoxylated alkylaluminum, for example, having an average composition represented by the general formula $R^{a}_{2.5}Al\ (OR^{b})\ 0.5$ and the like; alkylaluminum aryloxide such as diethylaluminum phenoxide, diethylaluminum (2,6-di-t-butyl-4-methylphenoxide) and the like; dialkylaluminum halide such as dimethylaluminum chloride, diethylaluminum chloride, dibutylaluminum chloride, diethylaluminum bromide, diisobutylaluminum chloride and the like; alkylaluminum sesquihalide such as ethylaluminum sesquichloride, butylaluminum sesquichloride, ethylaluminum sesquibromide and the like; partially halogenated alkylaluminum of alkylaluminum dihalide such as ethylaluminum dichloride and the like, and others; dialkylaluminum hydride such as diethylaluminum hydride, dibutylaluminum hydride and the like; other partially hydrogenated alkylaluminum of alkylaluminum

dihydrides such as ethylaluminum dihydride and propylaluminum dihydride and the like, and others; and partially alkoxylated and halogenated alkylaluminums such as ethylaluminum ethoxychloride, butylaluminum butoxychloride, ethylaluminum ethoxybromide and the like; and others.
A complex alkylated compound between a metal element of Group 1 of the periodic table and aluminum represented by the following general formula (20):

$$M^2AlR^a_4 \qquad (20)$$

(wherein, $M^2$ is Li, Na or K, and $R^a$ is a hydrocarbon group having 1 to 15 carbon atoms, preferably 1 to 4 carbon atoms.) As such compound, $LiAl(C_2H_5)_4$, LiAl $(C_7H_{15})_4$ and the like are included.
In addition, a compound similar to the compound represented by the formula (20) may be also used. For example, an organoaluminum compound in which two or more aluminum compounds are bonded via a nitrogen atom may be mentioned. The specific example of the compound includes $(C_2H_5)2AlN(C_2H_5)Al\ (C_2H_5)_2$ and the like.
From the viewpoint of easy availability, as an organoaluminum compound (b-3), trimethyl aluminum or triisobutyl aluminum is preferably used.

<Polymerization>

The polyethylene wax used in the present invention is obtained usually by homopolymerizing ethylene or copolymerizing ethylene and an α-olefin, in a liquid phase in the presence of the metallocene catalyst. In the polymerization, the process for using each component and the addition order are arbitrarily selected, but the following method may be exemplified.
[q1] A method for adding a component (A) alone to a polymerization reactor.
[q2] A method for adding a component (A) and a component (B) to a polymerization reactor in an arbitrary order.
In the [q2] method, at least two or more components of each catalyst may be brought into contact with each other in advance. At this time, a hydrocarbon solvent is generally used, but an α-olefin may be used as a solvent. In addition, each monomer used here is as described above.
The available polymerization method includes suspension polymerization where polymerization is carried out in a state where a polyethylene wax is present in the form of particles in a solvent such as hexane and the like, gas phase polymerization where polymerization is carried out without using a solvent, and solution polymerization where polymerization may be carried out at a polymerization temperature of 140°C or higher in a state where the polyethylene wax is melted alone or together with a solvent. Among these methods, solution polymerization is preferable in both aspects of economic efficiency and product quality.
The polymerization reaction may be carried out by either a batch process or a continuous process. When the polymerization is carried out by a batch process, the catalyst components are used in the concentrations explained below.
In the case of polymerizing an olefin using the olefin polymerization catalyst, the component (A) is used in the amount of usually $10^{-9}$ to $10^{-1}$ mol, preferably $10^{-8}$ to $10^{-2}$ mol per 1 liter of the reaction volume.
The component (b-1) is used in an amount such that the mole ratio of the component (b-1) to the all transition metal atoms (M) in the component (A) [(b-1)/M] is usually 0.01 to 5,000, preferably 0.05 to 2,000. The component (b-2) is used in an amount such that the mole ratio of the ionic compounds in the components (b-2) to all transition metals (M) in the component of (A) [(b-2)/M] is usually 0.01 to 5,000, preferably 1 to 2,000. The component (b-3) is used in an amount such that the mole ratio of the component (b-3) to the transition metal atoms (M) in the component (A) [(b-3)/M] is usually 1 to 10,000, preferably 1 to 5,000.
The polymerization reaction is carried out using 10 g of wax set on a filter under the conditions of a temperature of usually -20 to +200°C, preferably 50 to 180°C, more preferably 70 to 180°C and a pressure of usually not less than 0 Mpa to 7.8 MPa or lower (80 $kgf/cm^2$, gauge pressure), preferably not less than 0 Mpa to 4.9 MPa or lower (50 $kgf/cm^2$, gauge pressure).
In the polymerization, ethylene and an α-olefin used as needed are fed into the polymerization system in an amount ratio such that a polyethylene wax of the specific composition is obtained. In addition, in the polymerization, there may be added a molecular weight modifier such as hydrogen and the like may be added.
When polymerization is carried out in this manner, since the resulting polymer is usually obtained as a polymerization solution containing the polymer, a polyethylene wax may be obtained by treating the solution by a conventional method.
In the present invention, a catalyst containing the metallocene compound described in "Example of Metallocene Compound -1" is especially preferably used.
When such a catalyst is used, a polyethylene wax having the properties may be readily obtained.
The form of the polyethylene wax of the present invention is not particularly limited, but is typically particles in the form of pellets or tablets.

[Other Components]

In the present invention, in addition to the polyolefin wax resin and polyethylene wax, a stabilizer such as an antioxidant, an ultraviolet absorber, a light stabilizer and the like, and an additive such as a metal soap, a filler, a flame retardant and the like may be used where necessary, after adding them to a raw material.
The stabilizer includes an antioxidant such as a hindered phenol compound, a phosphite compound, and a thioether compound and the like; an ultraviolet absorber such as a benzotriazole compound, a benzophenone compound and the like; and a light stabilizer such as a hindered amine compound and the like.
The above metallic soap includes a stearate such as magnesium stearate, calcium stearate, barium stearate, zinc stearate and the like; and others.
The filler includes calcium carbonate, titanium oxide, barium sulfate, talc, clay, carbon black and the like.
The flame retardant includes a halogenated diphenyl ether such as a decabromodiphenyl ether, an octabromodiphenyl and the like, and a halogen compound such as a halogenated polycarbonate and the like; an inorganic compound such as antimony trioxide, antimony tetraoxide, antimony pentaoxide, sodium pyroantimonate, aluminum hydroxide and the like; a phosphorus compound; and others.
Further, as the flame retarding aid for drip prevention, a compound such as tetrafluoroethylene and the like may be added.
As the antibacterial agent or the antifungal agent, an organic compound such as an imidazole compound, a thiazole compound, a nitrile compound, a haloalkyl compound, a pyridine compound and the like; an inorganic substance and an inorganic compound such as silver, a silver compound, a zinc compound, a copper compound, a titanium compound, and the like; and others may be mentioned.
Among these compounds, silver and a silver compound are preferred because of the high thermal stability and high performance.
The silver compound includes a silver complex and a silver salt of a fatty acid, phosphoric acid and the like. If silver and a silver compound are used as an antibacterial agent or an antifungal agent, these substances may be used after being supported on a porous structure such as zeolite, silica gel, zirconium phosphate, calcium phosphate, hydrotalcite, hydroxyapatite, calcium silicate and the like.
The other additives include a coloring agent, a plasticizer, an anti-aging agent, a coloring agent, a plasticizer, an oil and the like.

<Compositional Ratio of Raw Materials>

The compositional ratio of the polyolefin resin and the polyethylene wax which are used as a raw material is not particularly limited, as long as the properties of the molded product to be obtained are not impaired, but the ratio is in the range of usually 0.01 to 10 parts by weight and preferably 2 to 3 parts by weight, based on 100 parts by weight of the polyolefin resin.
When the polyolefin resin and the polyethylene wax are used in the compositional ratio within the above range, the effect of improving the flowability at the time of blow molding is superior and the molding rate is further increased, as well as the productivity tends to increase. Further, the mechanical properties inherent in a polyolefin resin tend to be less impaired. In addition, compared to the case where the blow molding is performed without adding the polyethylene wax, the molding may be performed at a lower temperature, as a result, the cooling time may be sometimes reduced. Further, by lowering the molding temperature, the thermal deterioration of the resin is suppressed, and not only the reduction of the resin strength is suppressed, but also the burning or black specks of the resin may be sometimes suppressed.

[Blow Molding]

In the process for producing a molded product of the present invention, the raw materials are blow molded.
The blow molding process is not particularly limited, but the blow molding process includes, for example, extrusion blow molding, injection blow molding, and the like.
When extrusion blow molding is performed, usually, a mixture containing a polyolefin resin and a polyethylene wax is melted; the melted product is extruded to make a parison or a sheet; and the obtained parison or sheet is blow-molded using a blow molding machine.
When injection blow molding is performed, usually, a mixture containing a polyolefin resin and a polyethylene wax is melted; the melted product is injection-molded to make a tubular molded product; and the obtained tubular molded product is blow-molded by blowing air.
When polyethylene is used as a polyolefin resin, it may be blow molded by usually setting the mold temperature in the range of 20 to 50°C under the conditions in which the molding temperature is in the range of 150 to 200°C and

the blowing air pressure is in the range of 0.3 to 0.8 (MPa).
When polyethylene is used as a polyolefin resin, polyethylene having a smaller MI value is usually preferably used, from the viewpoint of suppressing a drawdown at the time of blow molding. In addition, when die swell tends to occur, a molding machine having a side-feeding type head may be used.
When polypropylene is used as a polyolefin resin, it may be blow molded by usually setting the mold temperature in the range of 20 to 50°C under the conditions in which the molding temperature is in the range of 190 to 260°C and the blowing air pressure is in the range of 0.3 to 0.6 (MPa).
When polypropylene is used as a polyolefin resin, the molding temperature is preferably 240°C or lower, from the viewpoint of further suppressing the thermal decomposition of polypropylene. In addition, from the viewpoint of further imparting impact resistance to the molded product to be obtained, among polypropylenes, a propylene block copolymer and a propylene random copolymer are preferred.
In this manner, there may be obtained a molded product, which may be used for, for example, bottles such as bottles for cosmetics, bottles for detergents, bottles for bath detergents and the like, cans for industrial chemicals, drums, tanks,building materials such as external walls and the like, automobile parts such as automobile exterior parts and the like, industrial machinery parts, electric and electronic components, and others.

[EXAMPLES]

Hereinafter, the present invention will be explained in more detail with reference to Examples, but it should be construed that the present invention is in no way limited to these examples.
In the following Examples, the properties of polyethylene waxes were measured in the following manner.

(Number Average Molecular Weight (Mn))

The number average molecular weight (Mn) was determined by GPC measurement. The measurement was conducted under the following conditions. In addition, the number average molecular weight (Mn) was determined based on the following conversion method by preparing a calibration curve using a commercially available monodisperse standard polystyrene.
Apparatus: Gel permeation Chromatograph Alliance GPC 2000 System (manufactured by Waters Corporation)
Solvent: o-dichlorobenzene
Column: TSK gel column (manufactured by Tosoh Corporation)x4
Flow rate: 1.0 mL/min
Sample: 0.15 mg/mL o-dichlorobenzene solution
Temperature: 140°C
Molecular weight conversion: in terms of PE/universal calibration method
In addition, for the calculation of the universal calibration, the following coefficients of Mark-Houwink viscosity equations are used.
The coefficient of polystyrene (PS): KPS=1.38 x $10^{-4}$, aPS=0.70 The coefficient of polyethylene (PE): KPE=5.06 x $10^{-4}$, aPE=0.70 (A Value and B Value)
The ratio of the components having the molecular weight of 1,000 or less was determined in % by weight from the GPC measurement results, which was used as the A value. The ratio of the components having the molecular weight of 20,000 or more was determined in % by weight from the GPC measurement results, which was used as the B value.

(Melt Viscosity)

The melt viscosity was measured at 140°C using a Brookfield viscometer.

(Density)

The density was measured by the density gradient tube process in accordance with JIS K7112.

(Melting Point)

The melting point was measured by differential scanning calorimetry (DSC) [DSC-20, Seiko Instruments Inc.]. Firstly, a measurement sample was heated to 200°C and kept for 5 minutes, and then immediately cooled to room temperature. Approximately 10 mg of the sample was subjected to DSC measurement under a condition of the temperature raising rate of 10°C/min in the temperature range from -20 to 200°C. The value of endothermic peak of the curve obtained from the measurement result was used as a melting point.

(Crystallization Temperature)

The crystallization temperature (Tc, °C) was measured under a condition of the temperature lowering rate of 2°C/min in accordance with ASTM D 3417-75.
In the following Examples, the properties of polyolefin resin were measured in the following manner.

(MI)

In case of polyethylene: The measurement was conducted under the conditions of a temperature of 190°C and a test load of 21.18 N in accordance with JIS K7210.
In case of polypropylene: The measurement was conducted under the conditions of a temperature of 230°C and a test load of 21.18 N in accordance with JIS K7210.

(Density)

The density was measured by the density gradient tube method in accordance with JIS K7112.
The properties of the polyethylene wax used in the present invention are summarized in Table 1. The 30200BT was synthesized by a catalyst containing the metallocene compound shown in <Example of Metallocene Compound -1>.

[Table 1]

Table 1: Property Values of Polyolefin Wax

| | Mn | Mw | Density (kg/m$^3$) | Melt Viscosity (mPa·s) | B Value (% by weight) | A Value (% by weight) | 0.0075×K | 230×K$^{-0.573}$ | DSC Melting Point (°C) | Crystallization Temperature (°C) | Left-hand value of Expression (III) |
|---|---|---|---|---|---|---|---|---|---|---|---|
| 30200BT | 2000 | 5000 | 913 | 300 | 2.2 | 9.3 | 2.3 | 10.8 | 98.2 | 86.6 | 91.41 |
| 40800T | 2400 | 7000 | 980 | 600 | 4.2 | 7.3 | 4.5 | 7.4 | 127.7 | 116.2 | 124.98 |

In the following Examples, the properties of the molded products were measured in the following manner.

(Productivity)

The productivity was evaluated by the number of shots per an hour unit in blow molding and the molding cycle time.

[Number of Shots]

The number of the bottles produced per one hour was used as the number of shots.

[Molding Cycle Time]

The time required for producing one bottle container was used as the molding cycle time.

(Mechanical Properties]

The drop test was carried out under the following conditions to evaluate.

[Drop Test]

A predetermined amount of water was added to a bottle container (inner volume: 2,000 mL, 1,500 mL, or 1,000 mL) made under the conditions described in Examples and Comparative Examples, and the bottle container was dropped from a predetermined height, in accordance with the following conditions. After the drop test, the evaluation was performed by the number of bottles whitened or broken.

In case of a bottle having an inner volume of 2,000 mL, the amount of water added is 1,500 mL and the test height is 1.5 m.

In case of a bottle having an inner volume of 1,500 mL, the amount of water added is 800 mL and the test height is 1.2 m.

In case of a bottle having an inner volume of 1,000 mL, the amount of water added is 600 mL and the test height is 1.2 m.

(Molded product Appearance)

The appearance of a bottle container was visually observed and evaluated by the following criteria.

A: No thickness irregularity
B: Thickness irregularity is slightly prominent.
C: Thickness irregularity is considerably prominent.

[Example 1]

There were thoroughly mixed 100 parts by mass of a propylene homopolymer (PrimePolypro E111G; manufactured by Prime Polymer Co., Ltd., density=910 (kg/$m^3$), MI=0.5 g/10 min) and 2 parts by mass of a metallocene polyethylene wax (Excerex 30200BT, manufactured by Mitsui Chemicals Inc., ethylene content: 95 mol %, density: 913 kg/$m^3$, Mn=2,000, A value=9.3, B value=2.2, melt viscosity=300 (mPa·s)) in a tumbler mixer. Subsequently, the molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1. 3, a die diameter of φ82 mm (core diameter of φ78 mm)) was set to 190°C and the mold temperature was set to 20°C. The resulting mixture was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 23.8 (kg/h) and the temperature of the discharged resin (parison) was 198 °C. The weight of the resulting molded product was 200±2.0 g, and the appearance of the molded product was excellent. In addition, as the result of the drop test (the addition amount of water was 1,500 mL and the test height was 1.5 m), whitening and breakage of the bottle were not observed at all. The results are shown in Table 2.

[Example 2]

The blow molding was carried out in the same manner as in Example 1 except that the addition amount of a metallocene polyethylene wax (Excerex 30200BT, manufactured by Mitsui Chemicals Inc.) was changed to 3 parts by

mass. The discharging rate at the time of molding was 26.0 (kg/h) and the temperature of discharged resin (parison) was 196°C. The weight of the resulting molded product was 200±2.0 g, and the appearance of the molded product was excellent. In addition, as the result of the drop test (the addition amount of water was 1,500 mL and the test height was 1.5 m), whitening and breakage of the bottle were not observed at all. The results are shown in Table 2.

[Comparative Example 1]

The molding temperature of a blow molding machine (JB105 hollow molding machine manufactured by The Japan Steel Works, LTD. , direct mode (1 parison-1 mold mode), a screw diameter of molding machine of φ50 mm, L/D=22, a compression ratio of 1.3, a die diameter of φ82 mm (core diameter of φ 78 mm)) was set to 210°C and the mold temperature was set to 20°C. A propylene homopolymer (PrimePolypro E111G; manufactured by Prime Polymer Co., Ltd., density=910 (kg/ $m^3$), MI=0.5 g/10 min) was added to the molding machine and subjected to melt-kneading at a screw rotation speed of 30 rpm, followed by blow molding under a blowing air pressure of 0.5 MPa to make a bottle container having an inner volume of 2,000 mL. The discharging rate at the time of molding was 20.0 (kg/h) and the temperature of discharged resin (parison) was 218°C. The weight of the molded product obtained was 200±2.0 g, and the appearance of the obtained molded product was excellent. In the drop test (the addition amount of water was 1,500 mL and the test height was 1.5 m), excellent results were obtained. However, although the molding temperature was raised by 30°C as compared to that in Examples, the number of shots was decreased and the molding cycle time was increased, thus the productivity was insufficient. The results are shown in Table 2.

[Comparative Example 2]

The molding temperature of a blow molding machine (JB105 hollow molding machine manufactured by The Japan Steel Works, LTD., direct mode (1 parison-1 mold mode), a screw diameter of molding machine of φ50 mm, L/D=22, a compression ratio of 1.3, a die diameter of φ82 mm (core diameter of φ 78 mm)) was set to 190°C and the mold temperature was set to 20°C. A propylene homopolymer (PrimePolypro E111G; manufactured by Prime Polymer Co., Ltd., density=910 (kg/$m^3$), MI=0.5 g/10 min) was added to the molding machine and subjected to melt-kneading at a screw rotation speed of 30 rpm, followed by blow molding under a blowing air pressure of 0.5 MPa to make a bottle container having an inner volume of 2,000 mL. The discharging rate at the time of molding was 16.1 (kg/h) and the temperature of discharged resin (parison) was 191°C. The resulting molded product had a considerable thickness irregularity and a problem with the appearance. Even in the drop test (the addition amount of water was 1, 500 mL and the test height was 1.5 m), whitened or cracked bottles were observed. In addition, as compared to Examples, the number of shots was decreased, the molding cycle time was reduced, and the productivity was insufficient. The results are shown in Table 2.

[Table 2]

Table 2: Results of Blow Molding

| Example/Comparative Example No. | | Example 1 | Example 2 | Comparative Example 1 | Comparative Example 2 |
|---|---|---|---|---|---|
| Polypropylene | Kind | E111G | E111G | E111G | E111G |
| | Amount | 100 | 100 | 100 | 100 |
| Polyethylene Wax | Kind | 30200BT | 30200BT | | |
| | Amount | 2 | 3 | | |
| Molding Temperature | °C | 190 | 190 | 210 | 190 |
| Discharging Rate | kg/h | 23.8 | 26.0 | 20.0 | 16.1 |
| Resin Temperature | °C | 198 | 196 | 218 | 191 |
| Number of Shots | pc/h | 75 | 80 | 62 | 49 |
| Molding Cycle Time | sec | 48 | 45 | 58 | 73 |

(continued)

| Example/Comparative Example No. | | Example 1 | Example 2 | Comparative Example 1 | Comparative Example 2 |
|---|---|---|---|---|---|
| Weight of Molded product | g | 200.2 | 200.1 | 200.0 | 190.5 |
| Appearance of Molded product | | A | A | A | C |
| Brimful Filling Weight | g | 2239 | 2238 | 2239 | 2209 |
| Drop Test | pcs/10pcs | 0 | 0 | 0 | 6 |

[Example 3]

There were thoroughly mixed 100 parts by mass of a polypropylene block copolymer (PrimePolypro B701WB; manufactured by Prime Polymer Co., Ltd., density=920 (kg/$m^3$), MI=0.5 g/10 min) and 2 parts by mass of a metallocene polyethylene wax (Excerex 30200BT, manufactured by Mitsui Chemicals Inc., ethylene content: 95 mol %, density: 913 kg/$m^3$, Mn=2,000, Avalue=9.3, B value=2.2, melt viscosity=300 (mPa·s)) in a tumbler mixer. Subsequently, the molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1.3, a die diameter of φ82 mm (core diameter of φ78 mm)) was set to 190°C and the mold temperature was set to 20°C. The resulting mixture was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 25.2 (kg/h) and the temperature of the discharged resin (parison) was 198°C. The weight of the resulting molded product was 200±3.0 g, and the appearance of the molded product was excellent. In addition, as the result of the drop test (the addition amount of water was 1,500 mL and the test height was 1.5 m), whitening and breakage of the bottle were not observed at all.
The results are shown in Table 3.

[Example 4]

The blow molding was carried out in the same manner as in Example 3 except that the addition amount of a metallocene polyethylene wax (Excerex 30200BT, manufactured by Mitsui Chemicals Inc.) was changed to 3 parts by mass. The discharging rate at the time of molding was 27.3 (kg/h) and the temperature of discharged resin (parison) was 196°C. The weight of the resulting molded product was 200±3.0 g, and the appearance of the molded product was excellent. In addition, as the result of the drop test (the addition amount of water was 1, 500 mL and the test height was 1.5 m), whitening and breakage of the bottle were not observed at all. The results are shown in Table 3.

[Comparative Example 3]

The molding temperature of a blow molding machine (JB105 hollow molding machine manufactured by The Japan Steel Works, LTD., direct mode (1 parison-1 mold mode), a screw diameter of molding machine of φ50 mm, L/D=22, a compression ratio of 1.3, a die diameter of φ82 mm (core diameter of φ 78 mm)) was set to 210°C and the mold temperature was set to 20°C. A polypropylene block copolymer (PrimePolypro B701WB; manufactured by Prime Polymer Co., Ltd., density=920 (kg/ $m^3$), MI=0.5 g/10 min) was added to the molding machine and subjected to melt-kneading at a screw rotation speed of 30 rpm, followed by blow molding under a blowing air pressure of 0.5 MPa to make a bottle container having an inner volume of 2,000 mL. The discharging rate at the time of molding was 21.0 (kg/h) and the temperature of discharged resin (parison) was 219°C. The weight of the molded product obtained was 200±3.0 g, and the appearance of the molded product was excellent. In the drop test (the addition amount of water was 1,500 mL and the test height was 1.5 m), excellent results were obtained. However, although the molding temperature was raised by 30°C as compared to that in Examples, the number of shots was decreased and the molding cycle time was increased, thus the productivity was insufficient. The results are shown in Table 3.

[Comparative Example 4]

The molding temperature of a blow molding machine (JB105 hollow molding machine manufactured by The

Japan Steel Works, LTD., direct mode (1 parison-1 mold mode), a screw diameter of molding machine of φ50 mm, L/D=22, a compression ratio of 1.3, a die diameter of φ82 mm (core diameter of φ 78 mm)) was set to 190°C and the mold temperature was set to 20°C. A propylene homopolymer (PrimePolypro B701WB; manufactured by Prime Polymer Co., Ltd., density=920 (kg/ $m^3$), MI=0.5 g/10 min) was added to the molding machine and subjected to melt-kneading at a screw rotation speed of 30 rpm, followed by blow molding under a blowing air pressure of 0.5 MPa to make a bottle container having an inner volume of 2,000 mL. The discharging rate at the time of molding was 16.8 (kg/h) and the temperature of discharged resin (parison) was 192°C. The resulting molded product had a considerable thickness irregularity and a problem with the appearance. Even in the drop test (the addition amount of water was 1, 500 mL and the test height was 1.5 m), whitened or cracked bottles were observed. In addition, as compared to Examples, the number of shots was decreased, the molding cycle time was increased, and the productivity was insufficient. The results are shown in Table 3.

[Table 3]

Table 3: Results of Blow Molding

| Example/Comparative Example No. | | Example 3 | Example 4 | Comparative Example 3 | Comparative Example 4 |
|---|---|---|---|---|---|
| Polypropylene | Kind | B701WB | B701WB | B701WB | B701WB |
| | Amount | 100 | 100 | 100 | 100 |
| Polyethylene Wax | Kind | 30200BT | 30200BT | | |
| | Amount | 2 | 3 | | |
| Molding Temperature | °C | 190 | 190 | 210 | 190 |
| Discharging Rate | kg/h | 25.2 | 27.3 | 21.0 | 16.8 |
| Resin Temperature | °C | 198 | 196 | 219 | 192 |
| Number of Shots | pc/h | 70 | 76 | 59 | 47 |
| Molding Cycle Time | sec | 51 | 47 | 61 | 76 |
| Weight of Molded product | g | 200.2 | 199.8 | 200.0 | 189.8 |
| Appearance of Molded product | | A | A | A | C |
| Brimful Filling Weight | g | 2239 | 2237 | 2238 | 2213 |
| Drop Test | pcs/10pcs | 0 | 0 | 0 | 4 |

[Example 5]

There were thoroughly mixed 100 parts by mass of a propylene random copolymer (PrimePolypro B211WA; manufactured by Prime Polymer Co., Ltd., density=910 (kg/$m^3$) MI=0.5 g/10 min) and 2 parts by mass of a metallocene polyethylene wax (Excerex 30200BT, manufactured by Mitsui Chemicals Inc., ethylene content: 95 mol %, density: 913 kg/$m^3$, Mn=2,000, A value=9.3, B value=2.2, melt viscosity=300 (mPa·s)) in a tumbler mixer. Subsequently, the molding temperature of a blow molding machine (JEB-15 blow molding machine manufactured by The Japan Steel Works, Ltd., 1 parison-2 mold mode; a screw diameter of molding machine of φ50 mm, L/D=28, compression ratio of 1.3, a die diameter of φ45 mm (core diameter of φ40 mm)) was set to 180°C and the mold temperature was set to 25°C. The resulting mixture was added to the molding machine and subjected to melt-kneading at a screw rotation speed of 40 rpm, followed by blow molding with a blowing air pressure of 0.5 MPa to make a bottle container having an inner volume of 1,500 mL. The discharging rate at the time of molding was 20.6 (kg/h) and the temperature of the discharged resin (parison) was 187°C. The weight of the resulting molded product was 80±2.5 g, and the appearance of the molded product was excellent. In addition, as the result of the drop test (the addition amount of water was 800 mL and the test

height was 1.2 m), whitening and breakage of the bottle were not observed at all. The results are shown in Table 4.

[Example 6]

The blow molding was carried out in the same manner as in Example 1 except that the addition amount of a metallocene polyethylene wax (Excerex 30200BT, manufactured by Mitsui Chemicals Inc.) was changed to 3 parts by mass. The discharging rate at the time of molding was 21.3 (kg/h) and the temperature of discharged resin (parison) was 186°C. The weight of the resulting molded product was 80±2.5 g, and the appearance of the molded product was excellent. In addition, as the result of the drop test (the addition amount of water was 800 mL and the test height was 1.2 m), whitening and breakage of the bottle were not observed at all. The results are shown in Table 4.

[Comparative Example 5]

The molding temperature of a blow molding machine (JEB-15 blow molding machine manufactured by The Japan Steel Works, Ltd., 1 parison-2 mold mode, a screw diameter of molding machine of φ50 mm, L/D=28, compression ratio of 1.3, a die diameter of φ45 mm (core diameter of φ40 mm)) was set to 200°C and the mold temperature was set to 25°C. A propylene random copolymer (PrimePolypro B211WA; manufactured by Prime Polymer Co., Ltd., density=910 (kg/$m^3$), MI=0.5 g/10 min) was added to the molding machine and subjected to melt-kneading at a screw rotation speed of 40 rpm, followed by blow molding with a blowing air pressure of 0.5 MPa to make a bottle container having an inner volume of 1,500 mL. The discharging rate at the time of molding was 16.0 (kg/h) and the temperature of the discharged resin (parison) was 206°C. The weight of the resulting molded product was 80±2.5 g, and the appearance of the molded product was excellent. In the drop test (the addition amount of water was 800 mL and the test height was 1.2 m), excellent results were obtained. However, although the molding temperature was raised by 20°C as compared to that in Examples, the number of shots was decreased and the molding cycle time was reduced, thus the productivity was insufficient. The results are shown in Table 4.

[Comparative Example 6]

The molding temperature of a blow molding machine (JEB-15 blow molding machine manufactured by The Japan Steel Works, Ltd., 1 parison-2 mold mode, a screw diameter of molding machine of φ50 mm, L/D=28, compression ratio of 1.3, a die diameter of φ45 mm (core diameter of φ40 mm)) was set to 180°C and the mold temperature was set to 25°C. A propylene random copolymer (PrimePolypro B211WA; manufactured by Prime Polymer Co., Ltd., density=910 (kg/$m^3$), MI=0.5 g/10 min) was added to the molding machine and subjected to melt-kneading at a screw rotation speed of 40 rpm, followed by blow molding with a blowing air pressure of 0.5 MPa to make a bottle container having an inner volume of 1,500 mL. The discharging rate at the time of molding was 13.8 (kg/h) and the temperature of the discharged resin (parison) was 181°C. The resulting molded product had a considerable thickness irregularity and a problem with the appearance. Even in the drop test (the addition amount of water was 800 mL and the test height was 1.2 m), whitened or cracked bottles were observed. In addition, as compared to Examples, the number of shots was decreased, the molding cycle time was increased, and the productivity was insufficient. The results are shown in Table 4.

[Table 4]

Table 4: Results of Blow Molding

| Example/Comparative Example No. | | Example 5 | Example 6 | Comparative Example 5 | Comparative Example 6 |
|---|---|---|---|---|---|
| Polypropylene | Kind | B211WA | B211WA | B211WA | B211WA |
| | Amount | 100 | 100 | 100 | 100 |
| Polyethylene Wax | Kind | 30200BT | 30200BT | | |
| | Amount | 2 | 3 | | |
| Molding Temperature | °C | 180 | 180 | 200 | 180 |
| Discharging Rate | kg/h | 20.6 | 21.3 | 16.0 | 13.8 |
| Resin Temperature | °C | 187 | 186 | 206 | 181 |

(continued)

| Example/Comparative Example No. | | Example 5 | Example 6 | Comparative Example 5 | Comparative Example 6 |
|---|---|---|---|---|---|
| Number of Shots | pc/h | 259 | 264 | 202 | 174 |
| Molding Cycle Time | sec | 28 | 27 | 36 | 41 |
| Weight of Molded product | g | 80.7 | 81.3 | 79.6 | 78.2 |
| Appearance of Molded product | | A | A | A | C |
| Brimful Filling Weight | g | 1674 | 1674 | 1673 | 1669 |
| Drop Test | pcs/10pcs | 0 | 0 | 0 | 7 |

[Example 7]

There were thoroughly mixed 100 parts by mass of a high density polyethylene (Hizex 5100B; manufactured by Prime Polymer Co., Ltd., density=944 (kg/$m^3$), MI=0.27 g/10 min) and 2 parts by mass of a metallocene polyethylene wax (Excerex 40800T, manufactured by Mitsui Chemicals Inc., ethylene content: 95 mol %, density: 980 kg/$m^3$, Mn=2,400, A value=7.3, B value=4.2, melt viscosity=600 (mPa·s)) in a tumbler mixer. Subsequently, the molding temperature of a blow molding machine (3B50 hollow molding machine manufactured by Placo Co., Ltd. 1 parison-1 mold mode, a screw diameter of molding machine of φ50 mm, L/D=30, compression ratio of 1.3, a die diameter of φ46 mm (core diameter of φ42 mm) was set to 150°C and the mold temperature was set to 25°C. The resulting mixture was added to the molding machine and subjected to melt-kneading at a screw rotation speed of 50 rpm, followed by blow molding with a blowing air pressure of 0.5 MPa to make a bottle container having an inner volume of 1,000 mL. The discharging rate at the time of molding was 8.7 (kg/h) and the temperature of the discharged resin (parison) was 158°C. The weight of the resulting molded product was 67±2 g, and the appearance of the molded product was excellent. In addition, as the result of the drop test (the addition amount of water was 600 mL and the test height was 1.2 m), whitening and breakage of the bottle were not observed at all. The results are shown in Table 5.

[Example 8]

The blow molding was carried out in the same manner as in Example 1 except that the addition amount of a metallocene polyethylene wax (Excerex 40800T, manufactured by Mitsui Chemicals Inc.) was changed to 3 parts by mass. The discharging rate at the time of molding was 9.0 (kg/h) and the temperature of discharged resin (parison) was 157°C. The weight of the resulting molded product was 67±2 g, and the appearance of the molded product was excellent. In addition, as the result of the drop test (the addition amount of water was 600 mL and the test height was 1.2 m), whitening and breakage of the bottle were not observed at all. The results are shown in Table 5.

[Comparative Example 7]

The molding temperature of a blow molding machine, (3B50 hollow molding machine manufactured by Placo Co., Ltd., 1 parison-1 mold mode, a screw diameter of molding machine of φ50 mm, L/D=30, compression ratio of 1.3, a die diameter of φ46 mm (core diameter of φ42 mm) was set to 170°C and the mold temperature was set to 25°C. A high density polyethylene (Hizex 5100B; manufactured by Prime Polymer Co., Ltd., density=944 (kg/$m^3$), MI=0.27 g/10 min) was added to the molding machine and subjected to melt-kneading at a screw rotation speed of 50 rpm, followed by blow molding with a blowing air pressure of 0.5 MPa to make a bottle container having an inner volume of 1,000 mL. The discharging rate at the time of molding was 6.7 (kg/h) and the temperature of the discharged resin (parison) was 178°C. The weight of the resulting molded product was 67±2 g, and the appearance of the molded product was excellent. In the drop test (the addition amount of water was 600 mL and the test height was 1.2 m), excellent results were obtained. However, although the molding temperature was raised by 20°C as compared to that in Examples, the number of shots was decreased and the molding cycle time was increased, thus the productivity was insufficient. The results are shown in Table 5.

[Comparative Example 8]

The molding temperature of a blow molding machine (3B50 hollow molding machine manufactured by Placo Co., Ltd. 1 parison-1 mold mode, a screw diameter of molding machine of φ50 mm, L/D=30, compression ratio of 1.3, a die diameter of φ46 mm (core diameter of φ42 mm) was set to 150°C and the mold temperature was set to 25°C. A high density polyethylene (Hizex 5100B; manufactured by Prime Polymer Co., Ltd., density=944 (kg/$m^3$), MI=0.27 g/10 min) was added to the molding machine and subjected to melt-kneading at a screw rotation speed of 50 rpm, followed by blow molding with a blowing air pressure of 0.5 MPa to make a bottle container having an inner volume of 1,000 mL. The discharging rate at the time of molding was 5.2 (kg/h) and the temperature of the discharged resin (parison) was 152°C. The resulting molded product had a considerable thickness irregularity and a problem with the appearance. Even in the drop test (the addition amount of water was 600 mL and the test height was 1.2 m), whitened or cracked bottles were observed. In addition, as compared to Examples, the number of shots was decreased, the molding cycle time was increased, and the productivity was insufficient. The results are shown in Table 5.

[Table 5]

Table 5: Results of Blow Molding

| Example/Comparative Example No. | | Example 7 | Example 8 | Comparative Example 7 | Comparative Example 8 |
|---|---|---|---|---|---|
| Polyethylene | Kind | 5100B | 5100B | 5100B | 5100B |
| | Amount | 100 | 100 | 100 | 100 |
| Polyethylene Wax | Kind | 40800T | 40800T | | |
| | Amount | 2 | 3 | | |
| Molding Temperature | °C | 150 | 150 | 170 | 150 |
| Discharging Rate | kg/h | 8.7 | 9 | 6.7 | 5.2 |
| Resin Temperature | °C | 158 | 157 | 178 | 152 |
| Number of Shots | pc/h | 149 | 151 | 113 | 93 |
| Molding Cycle Time | sec | 24 | 24 | 32 | 39 |
| Weight of Molded product | g | 67.3 | 67.6 | 66.8 | 65.7 |
| Appearance of Molded product | | A | A | A | C |
| Brimful Filling Weight | g | 1131 | 1131 | 1130 | 1126 |
| Drop Test | pcs/10pcs | 0 | 0 | 0 | 9 |

[Example 9]

There were thoroughly mixed 100 parts by mass of a low density polyethylene (MIRASON 50; manufactured by Prime Polymer Co., Ltd., density=920 (kg/$m^3$), MI=1.9 g/10 min) and 2 parts by mass of a metallocene polyethylene wax (Excerex 30200BT, manufactured by Mitsui Chemicals Inc., ethylene content: 95 mol %, density: 913 kg/$m^3$, Mn=2,000, A value=9.3, B value=2.2, melt viscosity=300 (mPa·s)) in a tumbler mixer. Subsequently, the molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1.3, a die diameter of φ82 mm (core diameter of φ78 mm)) was set to 180°C and the mold temperature was set to 20°C. The resulting mixture was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 27.5 (kg/h) and the temperature of the discharged

resin (parison) was 188 °C. The weight of the resulting molded product was 200±3.0 g, and the appearance of the molded product was excellent. In addition, as the result of the drop test (the addition amount of water was 1,500 mL and the test height was 1.5 m), whitening and breakage of the bottle were not observed at all. The results are shown in Table 6.

[Example 10]

The blow molding was carried out in the same manner as in Example 3 except that the addition amount of a metallocene polyethylene wax (Excerex 30200BT, manufactured by Mitsui Chemicals Inc.) was changed to 3 parts by mass. The discharging rate at the time of molding was 30.0 (kg/h) and the temperature of discharged resin (parison) was 187°C. The weight of the resulting molded product was 200±3.0 g, and the appearance of the molded product was excellent. In addition, as the result of the drop test (the addition amount of water was 1,500 mL and the test height was 1.5 m), whitening and breakage of the bottle were not observed at all. The results are shown in Table 6.

[Comparative Example 9]

The molding temperature of a blow molding machine (JB105 hollow molding machine manufactured by The Japan Steel Works, Ltd. , direct mode (1 parison-1 mold mode), a screw diameter of molding machine of φ50 mm, L/D=22, compression ratio of 1.3, a die diameter of φ82 mm (core diameter of φ78 mm)) was set to 200°C and the mold temperature was set to 20°C. A low density polyethylene (MIRASON 50; manufactured by Prime Polymer Co., Ltd., density=920 (kg/$m^3$), MI=1.9 g/10 min) was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 25.0 (kg/h) and the temperature of the discharged resin (parison) was 208°C. The weight of the resulting molded product was 200±3.0 g, and the appearance of the molded product was excellent. In the drop test (the addition amount of water was 1,500 mL and the test height was 1.5 m), excellent results were obtained. However, although the molding temperature was raised by 20°C as compared to that in Examples, the number of shots was decreased and the molding cycle time was increased, thus the productivity was insufficient.
The results are shown in Table 6.

[Comparative Example 10]

The molding temperature of a blow molding machine (JB105 hollow molding machine manufactured by The Japan Steel Works, Ltd. , direct mode (1 parison-1 mold mode), a screw diameter of molding machine of φ50 mm, L/D=22, compression ratio of 1.3, a die diameter of φ82 mm (core diameter of φ78 mm)) was set to 180°C and the mold temperature was set to 20°C. A low density polyethylene (MIRASON 50; manufactured by Prime Polymer Co., Ltd., density=920 (kg/$m^3$), MI=1.9 g/10 min) was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 22.5 (kg/h) and the temperature of the discharged resin (parison) was 181°C. The resulting molded product had a considerable thickness irregularity and a problem with the appearance. Even in the drop test (the addition amount of water was 1, 500 mL and the test height was 1.5 m), whitened or cracked bottles were observed. In addition, as compared to Examples, the number of shots was decreased, the molding cycle time was increased, and the productivity was insufficient. The results are shown in Table 6.

[Table 6]

Table 6: Results of Blow Molding

| Example/Comparative Example No. | | Example 9 | Example 10 | Comparative Example 9 | Comparative Example 10 |
|---|---|---|---|---|---|
| Polyethylene | Kind | MIRASON50 | MIRASON50 | MIRASON50 | MIRASON50 |
| | Amount | 100 | 100 | 100 | 100 |
| Polyethylene Wax | Kind | 30200BT | 30200BT | | |
| | Amount | 2 | 3 | | |

(continued)

| Example/Comparative Example No. | | Example 9 | Example 10 | Comparative Example 9 | Comparative Example 10 |
|---|---|---|---|---|---|
| Molding Temperature | °C | 180 | 180 | 200 | 180 |
| Discharging Rate | kg/h | 27.5 | 30.0 | 25.0 | 22.5 |
| Resin Temperature | °C | 188 | 187 | 208 | 181 |
| Number of Shots | pc/h | 80 | 85 | 72 | 65 |
| Molding Cycle Time | sec | 45 | 41 | 50 | 55 |
| Weight of Molded product | g | 201.8 | 202.2 | 202 | 191.5 |
| Appearance of Molded Articl | | A | A | A | C |
| Brimful Filling Weight | g | 2234 | 2232 | 2237 | 2208 |
| Drop Test | pcs/10pcs | 0 | 0 | 0 | 5 |

[Example 11]

There were thoroughly mixed 100 parts by mass of a linear low density polyethylene (ULTZEX 2020SB; manufactured by Prime Polymer Co., Ltd., density=920 (kg/$m^3$), MI=1.6 g/10 min) and 2 parts by mass of a metallocene polyethylene wax (Excerex 30200BT, manufactured by Mitsui Chemicals Inc., ethylene content: 95 mol %, density: 913 kg/$m^3$, Mn=2,000, A value=9.3, B value=2.2, melt viscosity=300 (mPa·s)) in a tumbler mixer. Subsequently, the molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1.3, a die diameter of φ82 mm (core diameter of φ78 mm)) was set to 180°C and the mold temperature was set to 20°C. The resulting mixture was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 26.4 (kg/h) and the temperature of the discharged resin (parison) was 188°C. The weight of the resulting molded product was 200±3.0 g, and the appearance of the molded product was excellent. In addition, as the result of the drop test (the addition amount of water was 1,500 mL and the test height was 1.5 m), whitening and breakage of the bottle were not observed at all.
The results are shown in Table 7.

[Example 12]

The blow molding was carried out in the same manner as in Example 3 except that the addition amount of a metallocene polyethylene wax (Excerex 30200BT, manufactured by Mitsui Chemicals Inc.) was changed to 3 parts by mass. The discharging rate at the time of molding was 28.8 (kg/h) and the temperature of discharged resin (parison) was 186°C. The weight of the resulting molded product was 200±3.0 g, and the appearance of the molded product was excellent. In addition, as the result of the drop test (the addition amount of water was 1,500 mL and the test height was 1.55 m), whitening and breakage of the bottle were not observed at all. The results are shown in Table 7.

[Comparative Example 11]

The molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1.3, a die diameter of φ82 mm (core diameter of φ78 mm)) was set to 200°C and the mold temperature was set to 20°C. A linear low density polyethylene (ULTZEX 2020SB; manufactured by Prime Polymer Co., Ltd., density=920 (kg/$m^3$), MI=1.6 g/10 min) was added to the molding machine and subjected to melt-kneading at a screw rotation speed of 30 rpm, followed by blow molding with a blowing air pressure of 0.5 MPa to make a bottle container having an

inner volume of 2,000 mL. The discharging rate at the time of molding was 24.0 (kg/h) and the temperature of the discharged resin (parison) was 207°C. The weight of the resulting molded product was 200±3.0 g, and the appearance of the molded product was excellent. In the drop test (the addition amount of water was 1,500 mL and the test height was 1.5 m), excellent results were obtained. However, although the molding temperature was raised by 20°C as compared to that in Examples, the number of shots was decreased and the molding cycle time was increased, thus the productivity was insufficient. The results are shown in Table 7.

[Comparative Example 12]

The molding temperature of a blow molding machine (JB105 hollow molding machine manufactured by The Japan Steel Works, Ltd., direct mode (1 parison-1 mold mode), a screw diameter of molding machine of φ50 mm, L/D=22, compression ratio of 1.3, a die diameter of φ82 mm (core diameter of φ78 mm)) was set to 180°C and the mold temperature was set to 20°C. A linear low density polyethylene (ULTZEX 2020SB, manufactured by Prime Polymer Co., Ltd., density=920 (kg/$m^3$), MI=1.6 g/10 min) was added to the molding machine and subjected to melt-kneading at a screw rotation speed of 30 rpm, followed by blow molding with a blowing air pressure of 0.5 MPa to make a bottle container having an inner volume of 2,000 mL. The discharging rate at the time of molding was 21.6 (kg/h) and the temperature of the discharged resin (parison) was 180°C. The resulting molded product had a considerable thickness irregularity and a problem with the appearance. Even in the drop test (the addition amount of water was 1, 500 mL and the test height was 1.5 m), whitened or cracked bottles were observed. In addition, as compared to Examples, the number of shots was decreased, the molding cycle time was increased, and the productivity was insufficient. The results are shown in Table 7.

[Table 7]

Table 7: Results of Blow Molding

| Example/Comparative Example No. | | Example 11 | Example 12 | Comparative Example 11 | Comparative Example 12 |
|---|---|---|---|---|---|
| Polyethylene | Kind | 2020SB | 2020SB | 2020SB | 2020SB |
| | Amount | 100 | 100 | 100 | 100 |
| Polyethylene Wax | Kind | 30200BT | 30200BT | | |
| | Amount | 2 | 3 | | |
| Molding Temperature | °C | 180 | 180 | 200 | 180 |
| Discharging Rate | kg/h | 26.4 | 28.8 | 24.0 | 21.6 |
| Resin Temperature | °C | 188 | 186 | 207 | 180 |
| Number of Shots | pc/h | 83 | 90 | 75 | 67 |
| Molding Cycle Time | sec | 43 | 40 | 48 | 53 |
| Weight of Molded product | g | 202.1 | 201.8 | 202.2 | 190.2 |
| Appearance of Molded product | | A | A | A | C |
| Brimful Filling Weight | g | 2236 | 2241 | 2239 | 2205 |
| Drop Test | pcs/10pcs | 0 | 0 | 0 | 6 |

## Claims

1. A process for producing a molded product by blow molding a mixture containing a polyolefin resin and a polyethylene

wax having a density of 890 to 980 ($kg/m^3$) as measured by the density gradient tube method in accordance with JIS K7112 and a number average molecular weight (Mn) of 500 to 3,000 in terms of polyethylene as determined by gel permeation chromatography (GPC) and satisfying the relationship represented by the following expression (I):

$$B \leq 0.0075 \times K \ldots (I)$$

wherein B is a content ratio (% by weight) of components having a molecular weight of 20,000 or more in terms of polyethylene in the polyethylene wax as determined by gel permeation chromatography and K is a melt viscosity (mPa·s) of the polyethylene wax at 140°C.

**2.** The process for producing a molded product by blow molding according to claim 1, wherein the polyethylene wax further satisfies the relationship represented by the following expression (II):

$$A \leq 230 \times K^{(-0.537)} \ldots (II)$$

wherein A is a content ratio (% by weight) of components having a molecular weight of 1,000 or less in terms of polyethylene in the polyethylene wax as determined by gel permeation chromatography and K is a melt viscosity (mPa·s) of the polyethylene wax at 140°C.

**INTERNATIONAL SEARCH REPORT**

International application No.
PCT/JP2007/054892

A. CLASSIFICATION OF SUBJECT MATTER
*B29C49/00*(2006.01)i, *C08F10/02*(2006.01)i, *C08L23/00*(2006.01)i, *B29K23/00*(2006.01)n, *B29K91/00*(2006.01)n

According to International Patent Classification (IPC) or to both national classification and IPC

B. FIELDS SEARCHED

Minimum documentation searched (classification system followed by classification symbols)
B29C49/00-49/80, C08C19/00-19/44, C08F6/00-246/00, C08F301/00, C08K3/00-13/08, C08L1/00-101/14, C08J5/00-5/02, C08J5/12-5/22, B29C45/00-45/84, B29C47/00-47/96

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-235719 A (Grand Polymer Co., Ltd.), 08 September, 1998 (08.09.98), Claims; Par. Nos. [0061], [0062] (Family: none) | 1,2 |
| A | JP 09-278951 A (Mitsui Petrochemical Industries, Ltd.), 28 October, 1997 (28.10.97), Claims; Par. Nos. [0142], [0143], [0146] (Family: none) | 1,2 |
| A | JP 2005-281449 A (Mitsui Chemicals, Inc.), 13 October, 2005 (13.10.05), Claims (Family: none) | 1,2 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 May, 2007 (16.05.07) | 29 May, 2007 (29.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/054892

C (Continuation). DOCUMENTS CONSIDERED TO BE RELEVANT

| Category* | Citation of document, with indication, where appropriate, of the relevant passages | Relevant to claim No. |
|---|---|---|
| E,X | WO 2007/043189 A1 (Mitsui Chemicals, Inc.), 19 April, 2007 (19.04.07), Claims 1 to 3; Par. Nos. [0121] to [0129] (Family: none) | 1,2 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05199380492 B
- JP 2003528948 A
- JP H04268307 B
- JP 2004175707 A
- WO 2001027124 A
- WO 2004029062 A
- WO 2004083265 A
- JP H0278687 B
- JP H02167305 B
- JP H0224701 B
- JP H03103407 B
- US 4960878 A
- US 5041584 A
- JP H01501950 B
- JP H01502036 B
- JP H03179005 B
- JP H03179006 B
- JP 3207703 A
- JP H03207704 B
- US 5321106 A
- JP 2004051676 A